# EUROPEAN PATENT SPECIFICATION

(11) **EP 0 740 450 B1**
(45) Date of publication and mention of the grant of the patent: **14.06.2006**
(21) Application number: 96302807.1
(22) Date of filing: 22.04.1996
(51) Int. Cl.: H04M 3/50, H04Q 3/66

(54) **Method and apparatus for skill-based routing in a call center**
Verfahren und Gerät zur auf Geschicklichkeit basierten Leitweglenkung in einer Anrufzentrale
Méthode et appareil d'acheminement basé sur l'habileté dans un centre d'appel

(30) Priority: 24.04.1995 US 427546
(43) Date of publication of application: 30.10.1996
(73) Proprietor: International Business Machines Corporation, Armonk, NY 10504 (US); Siemens Business Communication Systems, Inc. (a Delaware corp.), Santa Clara, CA 95052 (US)
(72) Inventor: Brooks, Nancy S., Markham, Ontario, L3R 3H6 (CA); Fryer, Paul D., Toronto, Ontario, M4A 1L8 (CA); Kaufman, Gary S., Thornhill, Ontario, L4J 8A6 (CA); Berkson, Stephen P., Los Gatos, California 95030 (US); Herel, Charles R., Pleasanton, California 94588 (US); Brooks, Laura M., Sunnyvale, California 94086 (US)
(74) Representative: Williams, Julian David

(56) References cited:
- EP-A- 0 701 358
- GB-A- 2 265 066
- GB-A- 2 293 724
- US-A- 5 206 903
- US-A- 5 309 513
- HARVEY D E ET AL: "CALL CENTER SOLUTIONS" AT & T TECHNICAL JOURNAL, vol. 70, no. 5, 1 September 1991, pages 36-44, XP000244602
- FOSTER R H: "ADVANCED DEFINITY CALL CENTERS: WORKING FOR YOU AND YOUR CUSTOMERS.COMPANIES TODAT KNOW THE IMPORTANCE OF PROVIDING EXCELLENT SERVICETO CALLERS" AT & T TECHNOLOGY, vol. 9, no. 2, 21 June 1994, pages 6-11, XP000458375
- HASSLER K W ET AL: "REVOLUTIONIZING DEFINITY CALL CENTERS IN THE 1990S" AT & T TECHNICAL JOURNAL, vol. 74, no. 4, 1 July 1995, pages 64-73, XP000517580

## Description

### Technical Field of the Invention

The present invention relates to the routing of telephone calls to agents at a call center. More specifically, the present invention relates to the routing of telephone calls based on the respective skills of the agents and the skill requirements of the telephone calls.

### Background of the Invention

In traditional ACD environments, call center managers evaluate how effectively they are utilizing their agent resources by the percentage of the agent's available time that is spent handling ACD calls. As with the "Quality of Service" problem discussed above this indicator only covers one aspect of the agents utilization, the time factor. It does not address the skill factor. For example, the following questions can not be answered by traditional ACD agent utilization indicators:
How effectively did I utilize my agents skills?
Did they handle calls for which they were underskilled or over-skilled ?
Are they handling calls the type of calls which will increase their skill level?
How is handling efficiency affected when calls are handled by agents with different skill levels?

The invention described in this application addresses these aspects of the "agent utilization" problem by providing call center managers a quantitative measure of how closely the callers requirements were met by the agent who handled the call.

US-A-5206903, discloses Automatic Call Distribution (ACD) equipment in which the information needs of an incoming caller are matched with the particular expertise of a telemarketing agent who handles such calls. Each incoming call is assigned up to three prioritized skill numbers that estimate skill requirements of the calling party.

US-A-5309513, discloses a telephone system having an automatic call distributor for receiving calls and distributing the calls to at least one ubiquitous agent associated with the automatic call distributor, a switch connected to the automatic call distributor, and a device for controlling the switch for connecting the switch to the ubiquitous agents.

Foster R H: 'Advanced Definity Call Centers: working for you and your customers. Companies today know the importance of providing excellent service to callers' AT&T Technology, vol. 9, no.2, 21 June 1994, pages 6-11, XP000458375 discloses a Definity Call Center. A feature of Definity is Expert Agent Selection (EAS) and when activated routes a call needing a skill to the most idle agent with that skill as a primary skill. If an agent is not available then the call is routed to an agent with that skill as a secondary skill.

EP-A-0701358, discloses a method and system for routing incoming telephone call to available agents based on agent skills. Each of the skill groups is comprised of agents having a common agent-skill indicator.

### Summary of the Invention

This invention is as set out in claim 1, preferred forms being set out in dependent claims 2 to 4.

### Brief Description of the Figures

Figure 1 is a functional block diagram of a telecommunication system that implements the preferred embodiment of the present invention.
Figure 2 is a functional block diagram of a call center and an automatic call distribution system implementing a preferred embodiment of the present invention.
Figure 3 is a flow chart illustrating a method performed by a transaction dispatcher of the preferred embodiment of the present invention.
Figures 4A and 4B are flow charts illustrating a pair of skill-only methods for matching an agent with a transaction of the preferred embodiment of the present invention.
Figure 5 is a flow chart illustrating a skill/preference method for matching an agent with a transaction of the preferred embodiment of the present invention.
Figure 6 is a flow chart illustrating a method of the preferred embodiment of the present invention for calculating a skill score for a skill expression without parentheses.
Figure 7 is a flow chart illustrating a method of the preferred embodiment of the present invention for calculating a skill score for a skill expression containing AND operators and OR operators.
Figure 8 is a flow chart illustrating a method of the preferred embodiment of the present invention for calculating a skill score for a specific agent and a specific skill.
Figure 9 is a flow chart illustrating a method of the preferred embodiment of the present invention for calculating a preference score for a skill expression without parentheses.
Figure 10 is a flow chart illustrating a method of the preferred embodiment of the present invention for calculating a preference score for a skill expression containing AND operators and OR operators.
Figure 11 is a flow chart illustrating a method of the preferred embodiment of the present invention for calculating a preference score for a specific agent and a specific skill.

### Detailed Description

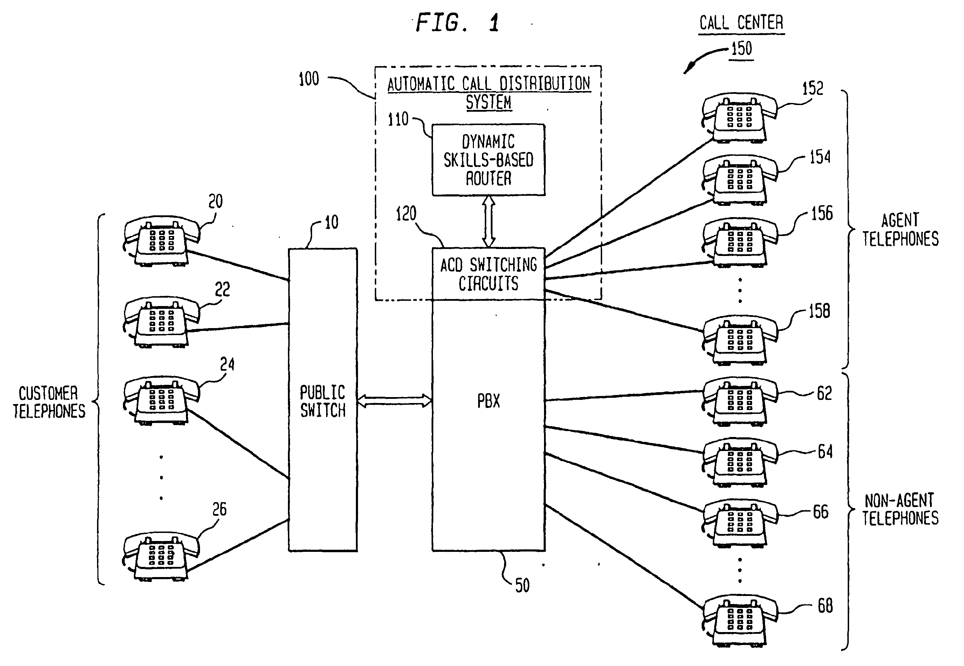

Figure 1 is a functional block diagram of a telecommunication system that implements the preferred embodiment of the present invention. The telecommunication system facilitates inbound telephone calls or transactions from customers to agents of a company's call center as well as outbound telephone calls or transactions from call center agents to customers. A number of customer telephones 20, 22, 24 and 26 are connected to a public switch 10. The public switch 10 is connected to the company's private branch exchange (PBX) 50. Figure 1 also illustrates a call center 150 comprising a number of agent telephones 152, 154, 156 and 158. The call center 150 is serviced by an automatic call distribution (ACD) system 100. The ACD system 100 comprises a dynamic skills-based router 110 and a set of ACD switching circuits 120. The ACD system 100 routs calls to the agent telephones 152, 154, 156 and 158 according to the method of the present invention. Figure 1 also illustrates a number of telephones 62, 64, 66 and 68 that are used by employees of the company that do not work in the call center 150.

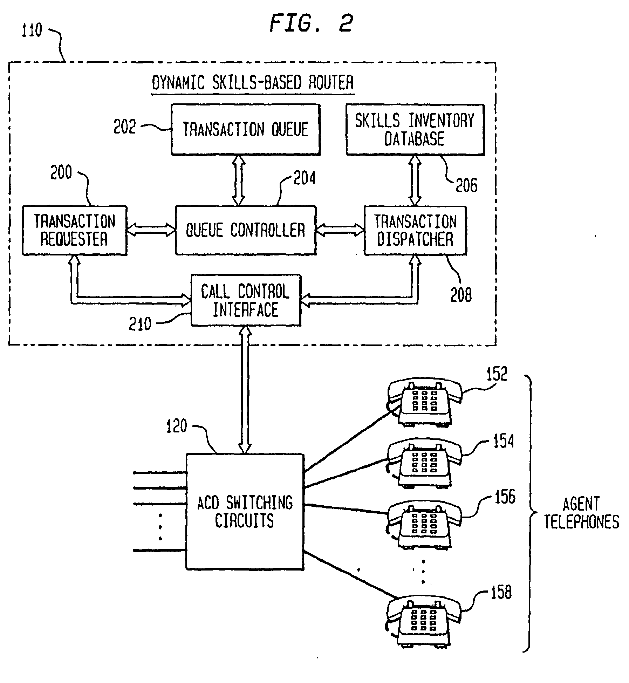

Figure 2 is a functional block diagram of the ACD system 100 and the call center 150 of Figure 1. Again, the ACD system 100 comprises the dynamic skills-based router 110 and the ACD switching circuits 120, and the call center 150 comprises the agent telephones 152, 154, 156 and 158. As further illustrated in Figure 2, the dynamic skills-based router 110 comprises a transaction requestor 200, a transaction queue 202, a queue controller 204, a skills inventory database 206, a transaction dispatcher 208 and a call control interface 210.

In general terms, a number of telephone agents use the agent telephones 152, 154, 156 and 158 to receive or place telephone calls or transactions between the call center 150 and the customer telephones 20, 22, 24 and 26. For example, a customer may use his home telephone 20 to place a telephone call to the company to order one of the company's products. The customer dials a general sales telephone number for the company. The public switch 10 routs the inbound telephone call to the company's PBX 50 by methods that are well known to a person of skill in the art. The PBX 50 routs all inbound telephone calls that are directed to the general sales telephone number to the ACD system 100 for routing to one of the agent telephones 152, 154, 156 or 158. The dynamic skills-based router 110 performs the method of the present invention to determine to which agent telephone 152, 154, 156 or 158 the inbound telephone call or transaction should be routed. The dynamic skills-based router 110 then controls the ACD switching circuits 120 to rout the transaction to the selected agent telephone 152, 154, 156 or 158. The call center agent stationed at the selected agent telephone 152, 154, 156 or 158 receives the inbound telephone call or transaction and processes the request. Thus, in the present example of a customer calling to order one of the company's products, the call center agent that receives the inbound call determines which product the customer wants to order, places the order, and arranges for payment by the customer.

The dynamic skills-based router 110 comprises a computer program. In Figure 1, the dynamic skills-based router 110 is illustrated as being a separate functional unit from the PBX 50, and, in the first actual embodiment of the present invention, the router 110 is physically implemented in a stand-alone personal computer that interfaces with the PBX 50. In this embodiment, the call control interface 210 implements a standard CSTA interface. However, in the preferred embodiment of the present invention, the router 110 is physically implemented within the PBX 50. The transaction requestor 200, the queue controller 204, the transaction dispatcher 208 and the call control interface 210 comprise separate routines of the computer program that implements the router 110. The skills inventory database 206 is a database that may be stored on a hard disk and read in to random access memory (RAM) upon execution of the program. The transaction queue 202 is preferably generated in RAM during the execution of the program.

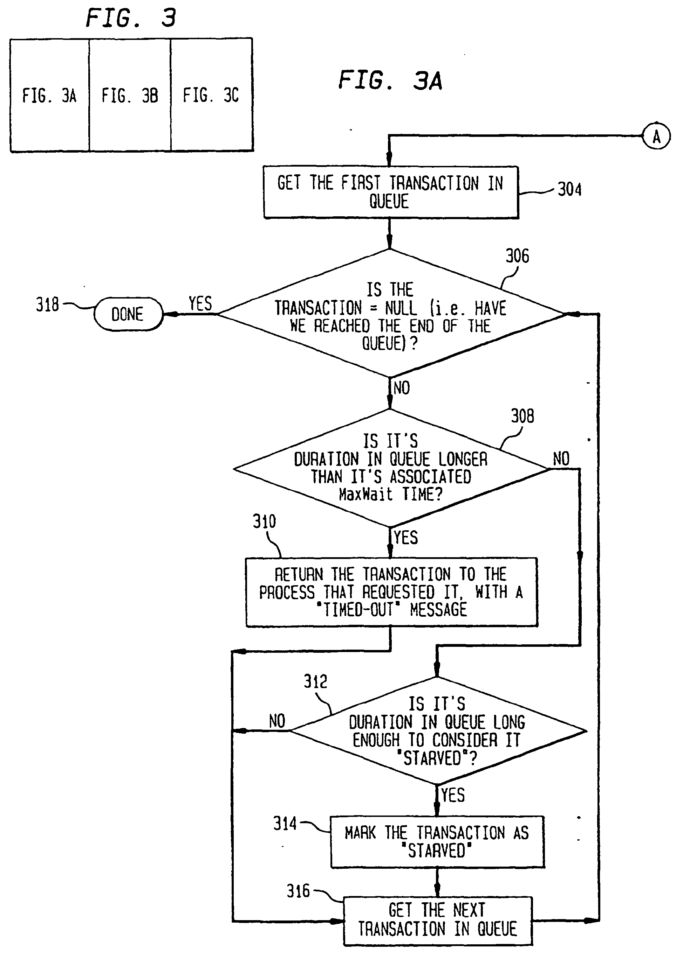

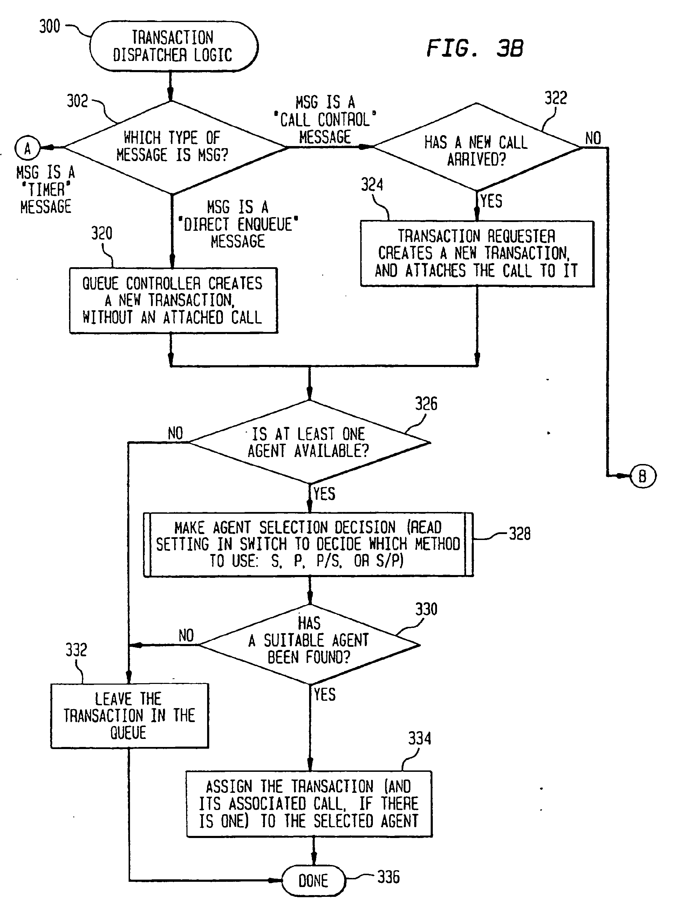

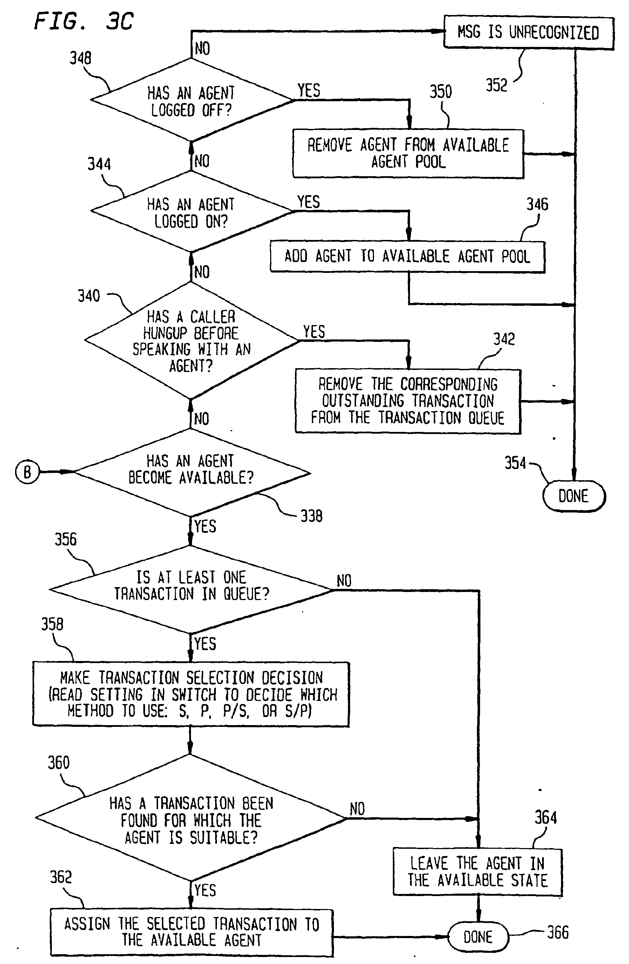

Figure 3 is a flow chart illustrating a method performed by the transaction dispatcher 208. The method begins at an initial block 300. At a decision block 302, the transaction dispatcher 208 receives a message (MSG) from any of three sources, an internal timer, the PBX 50 or from an operator at the stand-alone personal computer. At the decision block 302, the transaction dispatcher 208 determines whether the message is a timer message from the internal timer, a direct enqueue message from the operator or a call control message from the PBX switch 50. The call control interface 210 provides an interface between the router 110 and the PBX 50. Thus, for example, the call control interface 210 receives messages from the PBX 50 and forwards the messages other units within the router 110, such as the transaction dispatcher 208.

If the message is a timer message, the method proceeds to a process block 304. The transaction dispatcher 208 controls one or more internal timers within the stand-alone computer, and the internal timers indicate that set times have elapsed by generating messages to the transaction dispatcher 208. If the message received by the transaction dispatcher 208 is a direct enqueue message, the method proceeds to a process block 320. The operator at the stand-alone computer can initiate transactions by the creation of direct enqueue messages. For example, the operator can create a transaction that requires that a call center agent place a telephone call to a specific customer (ie. an outbound transaction). If the message received by the transaction dispatcher 208 is a call control message, the method proceeds to a decision block 322. The PBX 50 generates call control messages to the transaction dispatcher 208, for example, when the PBX 50 receives an incoming telephone call from a customer.

At the process block 304, the transaction dispatcher 208 requests the queue controller 204 for the first transaction from the transaction queue 202.

At a decision block 306, the transaction dispatcher 208 determines whether the transaction received from the queue controller 204 is a null transaction. The transaction will be a null transaction when the transaction queue 202 is empty. If the transaction is a null transaction, the method proceeds to a terminal block 318. Otherwise, the method proceeds to a decision block 308.

At the decision block 308, the transaction dispatcher 208 determines whether the transaction has been in the queue 202 longer than a first predetermined maximum period of time during which transactions are allowed to remain on the queue 202. If the first predetermined period of time has expired, the method proceeds to a process block 310. Otherwise, the method proceeds to a decision block 312.

At the process block 310, the transaction dispatcher 208 returns the transaction to the process that requested the transaction with a message that the transaction timed out. After the process block 310, the method proceeds to a process block 316.
At the decision block 312, the transaction dispatcher 208 determines whether the transaction has been in the queue 202 longer than a second predetermined period of time after which transactions are considered starved. If the second predetermined period of time has expired, the method proceeds to a process block 314. Otherwise, the method proceeds to the process block 316.

At the process block 314, the transaction dispatcher 208 marks the transaction as a starved transaction.

At the process block 316, the transaction dispatcher 208 requests the next transaction in the queue 202 from the queue controller 204. After the process block 316, the method returns to the decision block 306.

At the process block 320, the queue controller 204 receives the message and generates a new transaction. However, there is no incoming telephone call attached to the new transaction, as the transaction was generated from a direct enqueue message, instead of a call control message. After the process block 320, the method proceeds to a decision block 326.

At the decision block 322, the transaction dispatcher 208 determines whether the PBX 50 is reporting that a new incoming telephone call has arrived. If so, the method proceeds to a process block 324. Otherwise, the method proceeds to a decision block 338.

At the process block 324, the transaction requestor 200 creates a new transaction queue entry and attaches the incoming call to the transaction entry. The transaction requestor 200 utilizes the queue controller 204 to place the transaction entry in the queue 202. As described in greater detail below, the transaction entry contains information about the skill requirements of the incoming telephone call. The transaction requestor 200 can obtain the skill requirements of the incoming telephone call in various ways. For example, the transaction requestor 200 can determine the telephone number that was dialed by the customer and the telephone number of the customer: The telephone number that was dialed provides some skill requirement information if different telephone numbers are specified for calls having different requirements. For example, a first number can be specified for English transactions and another number can be specified for Spanish transactions. The transaction requestor 200 can determine whether the transaction requires English skills or Spanish skills from the telephone number that was dialed. The telephone number of the customer may be relevant, for example, if company internal customers have special skill requirements. In addition, the transaction requestor 200 can obtain skill requirement information by prompting the caller to press specific keys on the telephone to indicate the particular skill requirements of the call. The queue controller 204 also forwards the transaction entry directly to the transaction dispatcher 208 for immediate processing and possible immediate dispatching.

At the decision block 326, the transaction dispatcher 208 refers to a list of available agents to determine whether there are any call center agents available to receive the incoming telephone call. The list of available agents is maintained by the transaction dispatcher 208. If there are no agents available, the method proceeds to a process block 332. Otherwise, the method proceeds to a process block 328.

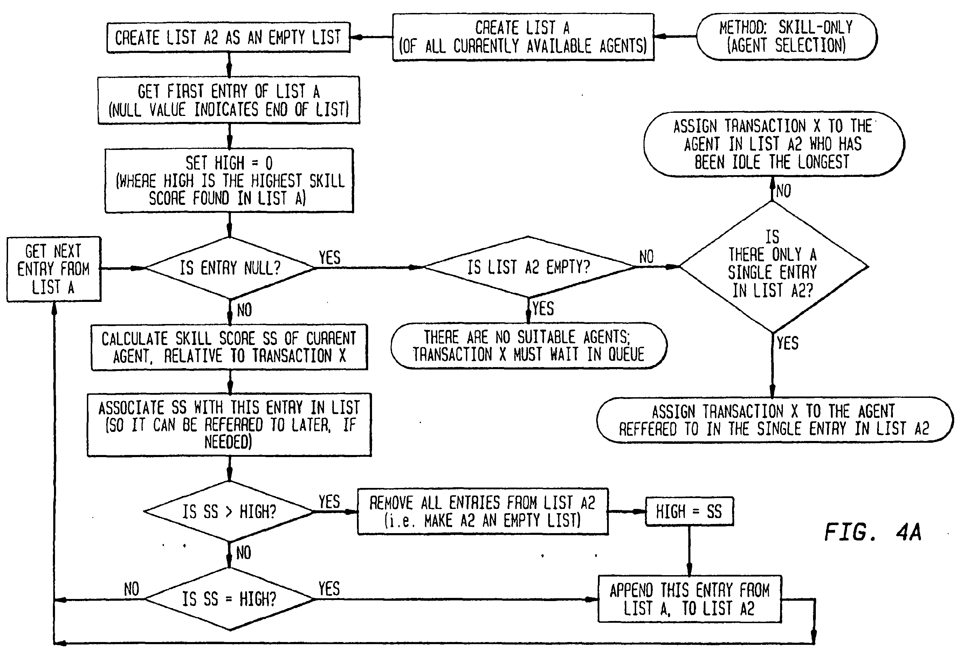

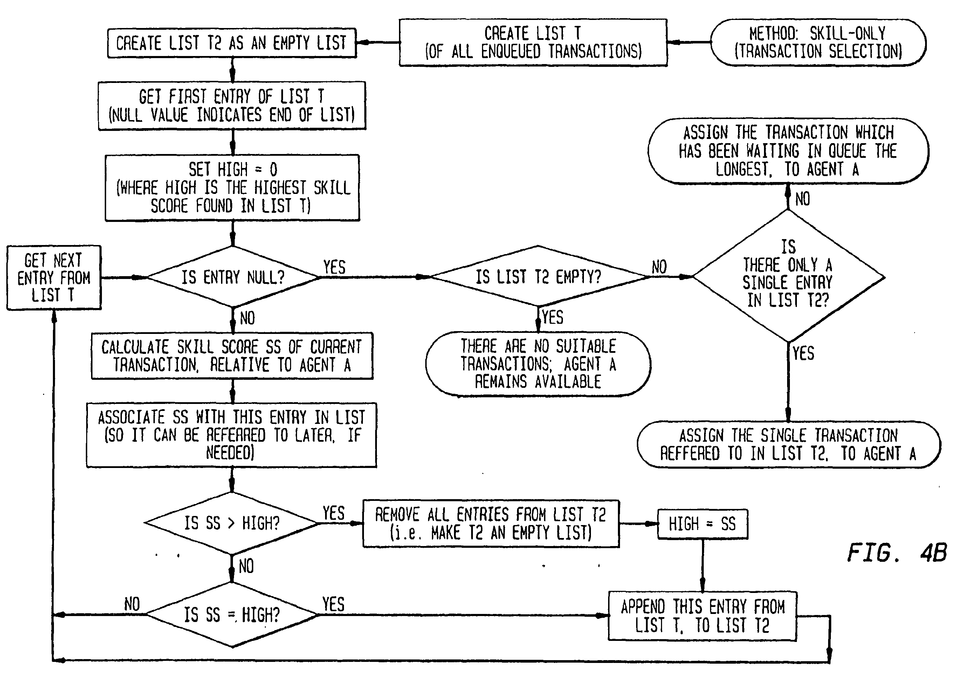

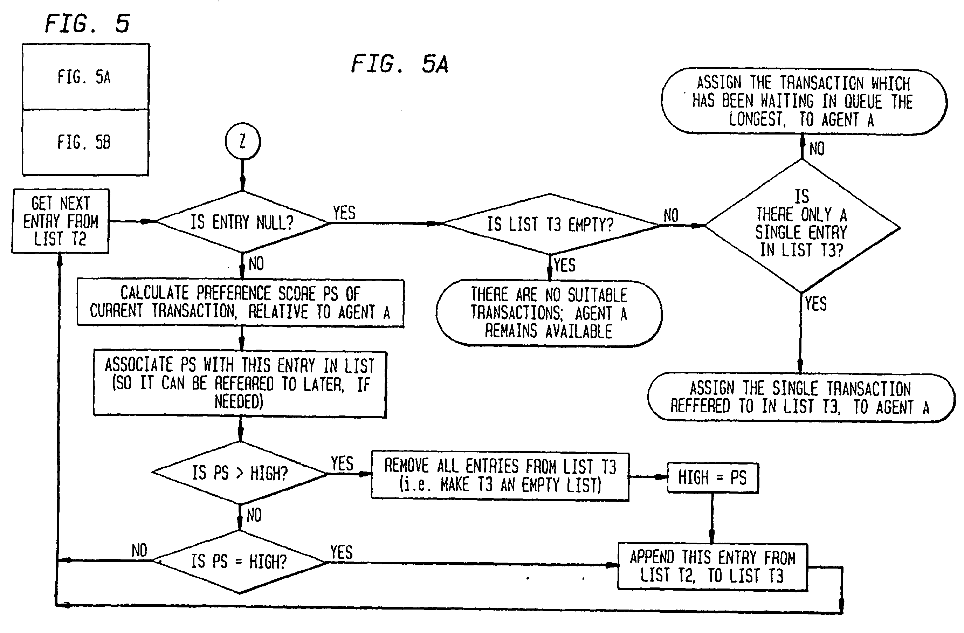

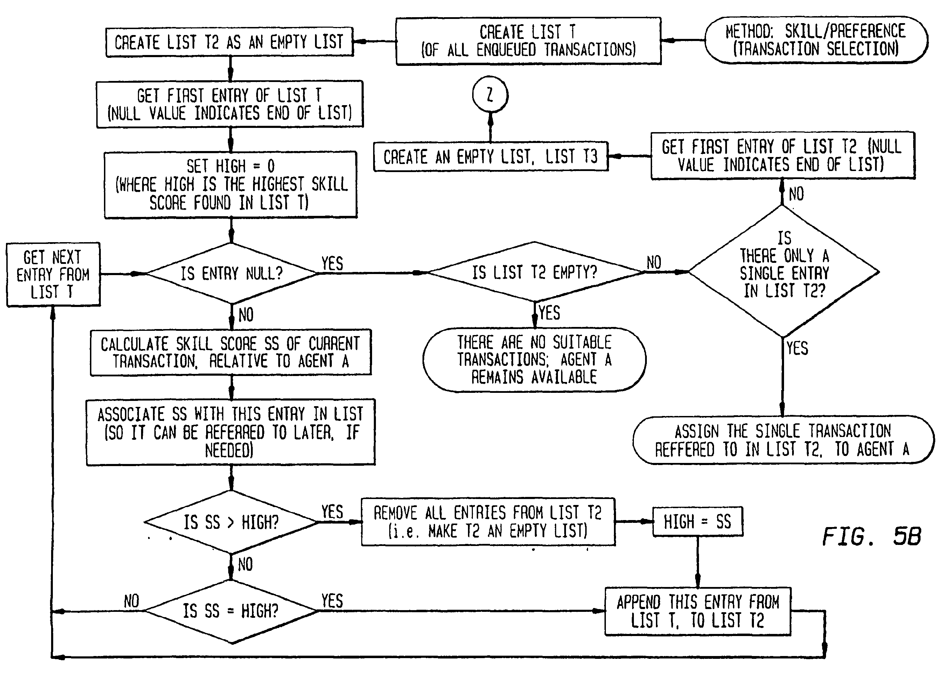

At the process block 328, the transaction dispatcher 208 attempts to match an available agent to the incoming telephone call. The method utilized by the transaction dispatcher 208 during the process block 328 is described in greater detail below with reference to Figures 4A, 4B and 5.

At a decision block 330, the transaction dispatcher 208 determines whether the method of the process block 328 has resulted in a suitable match between the available agents and the incoming telephone call. If a suitable agent has been found for the incoming call, the method proceeds to a process block 334. Otherwise, the method proceeds to the process block 332.

At the process block 332, the transaction dispatcher 208 leaves the transaction entry in the transaction queue 202 and advances to a terminal block 336.

At the process block 334, the transaction dispatcher 208 assigns the transaction, with any associated telephone call, to the agent selected during the process block 328. More specifically, the transaction dispatcher 208 causes the call control interface 210 to issue a command to the PBX 50, instructing the ACD switching circuits 120 to rout the telephone call, if any, to the agent telephone 152, 154, 156 or 158 corresponding to the selected agent. The transaction dispatcher 208 also controls the queue controller 204 to delete the corresponding entry in the transaction queue 202. After the process block 334, the method proceeds to the terminal block 336.

At the decision block 338, the transaction dispatcher 208 refers to the list of available agents to determine whether any call center agents have become available to process a transaction. If an agent has not just become available, the method proceeds to a decision block 340. Otherwise, the method proceeds to a decision block 356.

At the decision block 340, the transaction dispatcher 208 determines whether a caller has hung up the telephone before speaking with a call center agent. More specifically, the transaction dispatcher 208 determines from the call control message whether a telephone call has been terminated, and, if so, whether the telephone call was associated with an entry in the transaction queue 202. If a caller has hung up the telephone before speaking with an agent, the method proceeds to a process block 342. Otherwise, the method proceeds to a decision block 344.

At the process block 342, the transaction dispatcher 208 removes the entry in the queue 202 that was associated with the terminated telephone call. After the process block 342, the method proceeds to a terminal block 354.

At the decision block 344, the transaction dispatcher 208 refers to the call control message to determine whether an agent has logged onto the ACD system 100. An agent must log on to the ACD system 100 when beginning a call center shift in order to begin receiving transactions. If an agent has logged on, the method proceeds to a process block 346. Otherwise, the method proceeds to a decision block 348.

At the process block 346, the transaction dispatcher 208 adds the agent that just logged on to the list of available agents. After the process block 346, the method proceeds to the terminal block 354.

At the decision block 348, the transaction dispatcher 208 determines whether an agent has logged off the ACD system 100. If an agent has logged off, the method proceeds to a process block 350. Otherwise, the method proceeds to a process block 352.

At the process block 350, the transaction dispatcher 208 removes the agent that just logged off from the list of available agents. After the process block 350, the method proceeds to the terminal block 354.

At the process block 352, the transaction dispatcher 208 reports that it could not recognize the message. After the process block 352, the method proceeds to the terminal block 354.

At the decision block 356, the transaction dispatcher 208 determines from the queue controller 204 whether there are any transactions on the queue 202. If there is at least one transaction on the queue 202, the method proceeds to a process block 358. Otherwise, the method proceeds to a process block 364.

At the process block 358, the transaction dispatcher 208 attempts to match the available agent to one of the transactions on the queue 202. The method utilized by the transaction dispatcher 208 during the process block 358 is described in greater detail below with reference to Figures 4A, 4B and 5.

At a decision block 360,. the transaction dispatcher 208 determines whether a transaction has been found on the queue 202 that is suitable for the available agent. If a suitable transaction has been found, the method proceeds to a process block 362. Otherwise, the method proceeds to the process block 364.

At the process block 362, the transaction dispatcher 208 assigns the selected transaction from the queue 202 to the available agent. Again, more specifically, the transaction dispatcher 208 causes the call control interface 210 to issue a command to the PBX 50, instructing the ACD switching circuits 120 to rout the telephone call from the selected transaction, if any, to the agent telephone 152, 154, 156 or 158 corresponding to the available agent. The transaction dispatcher 208 also controls the queue controller 204 to delete the corresponding entry in the transaction queue 202. After the process block 362, the method proceeds to the terminal block 366.

At the process block 364, the transaction dispatcher 208 does not assign a transaction to the available agent and adds the agent to the list of available agents. After the process block 364, the method advances to the terminal block 366.

The method of Figure 3 ends at one of the terminal blocks 318, 336, 354 or 366. When the method ends, the transaction dispatcher 208 waits to receive a subsequent message. When a subsequent message is received, the method of Figure 3 begins again at the initial block 300.

The present invention attempts to find the best agent for each transaction, based on criteria that are considered to be most important for specific applications. The preferred embodiment assumes that certain criteria are most important, but other criteria may be considered more important in other specific applications. The criteria that are considered most important in the application of the preferred embodiment are described below. In the development of the present invention, the inventors made the following observations:
1) Each agent possesses a set of skills (agent_skills) for handling transactions, and each to some level of expertise (e.g. agent A may be very skilled at speaking Spanish, and moderately skilled at answering technical questions about product X).
   Agent_skills = { SA1,SA2,SA3,...SAi)
   where i is the total number of skills in the set. In the preferred embodiment of the present invention, the skills inventory database 206 contains a data structure corresponding to agent_skills for each agent in the call center 150. Each data structure indicates the skills and the level of expertise in each skill for the corresponding agent.
2) Each transaction of work requires a particular set of skills (trans_skills) (i.e. it requires that the agent performing that transaction possess the skills in trans_skills to a sufficient level of expertise) (for example, if the transaction is to answer a technical question about product X to a Spanish speaking customer, then expertise in both product X and Spanish will be required). This set of skills can be expressed as:
   Trans_skills = { ST1,ST2,ST3,...STj)
   where j is the total number of skills in the set. Each entry in the transaction queue 202 contains a data structure corresponding to trans_skills that contains the set of skills and the level of expertise for each skill that is required by the corresponding transaction.
3) At any given time T1, there is a set or pool of available agents working in the call center, which we will refer to as agents_pool. However, the agents_pool may not contain any members, if there are no available agents at time T1. This set does not include agents who are unable to perform a transaction at time T1, regardless of the reason for this inability. Agents_pool is the list of available agents referred to above in connection with the decision block 326.
4) At that same time, T1, there is also a set or pool of outstanding, unassigned transactions trans_pool. This set does not include any transactions which are already being processed by agents.

In the preferred embodiment of the present invention, the best agent is determined based on the following assumptions:
1) At any time T1, if there exists at least one agent in the pool agents_pool with the necessary skills to work on a given transaction trans_x, in the trans_pool, then there must exist at least one best agent (agent_best), who is not under-skilled to work on the transaction, and who is minimally over-skilled to work on the transaction.
2) Agent_best can be calculated by comparing the trans_skills associated with trans_x, with each of the agent_skills possessed by each of the agents in the agents_pool at time T1.

Under these assumptions, the agent_best must not be under-skilled to perform the transaction trans_x. Thus, the preferred embodiment of the present invention preferably avoids the under-skilled agent problems described above. If at time T1 there are no agents in agents_pool which possess the minimum necessary skills to satisfy the requirements of trans_x, then, by our definition of the best agent, there is no best agent for trans_x at time T1 (although note that there may be best agents for other transactions in the trans_pool, or that at some other time, T2, a best agent may become available in the agents_pool).

Also, the agent_best is preferably the minimally over-skilled of all of the agents in agent_pool. In other words, of all of the agents who are able to work on the transaction, the best agent is the one who has the minimum of extra training and expertise which will be wasted (i.e. that will not be required for that particular transaction). If a particular agent has exactly the level of expertise (i.e no higher than is required), in exactly the set of skills required to perform trans_x, then the measure of how much extra training and expertise being wasted if that agent handles trans_x, is defined as zero. Thus, the present invention also preferably minimizes the over-skilled agent problem, as described above.

For purposes of the preferred embodiment, the best agent is calculated by comparing the set of skills required for a transaction, to the set of skills possessed by each available agent. This calculation is described in greater detail immediately below.

For each skill in the set agent_skills for a given agent, we will include a property skill_level, which is a value from 1 to m, which expresses an estimate made by call center management of that agent's expertise in that skill (1 meaning that the agent has the minimal expertise acceptable to call center management in that skill, and m meaning the agent is as skilled as any agent can possibly be). So for example, we will write SA1(5) to denote that the agent has skill_level=5 for the skill SA1.

The set of skills possessed by each agent can then be expressed as:
Agent_skills = {SA1(LVL1),SA2(LVL2),SA3(LVL3),...SAi(LVLi)}
where i is the total number of skills in the set. Similarly, the set of skills required to perform trans_x can be expressed as:
Trans_skills = {ST1(LVL1),ST2(LVL2),ST3(LVL3),...STj(LVLj))
where j is the total number of skills in the set.

In the preferred embodiment, an absolute_agent_best for trans_x is defined as the set of agents for whom the following conditions are true:
1) The set trans_skills is equal to the set agent_skills (i.e. they have the same number of elements, all of which are identical, although the level of expertise may vary).
2) For each skill in trans_skills, STx, when compared to its equivalent skill in agent_skills, SAx, the difference between the skill_levels is zero (i.e. STx(LVLx) - SAx(LVLx)=0 ). This condition can be stated more succinctly as follows:
   The sum of STx(LVLx) - SAx(LVLx)=0
   Where x ranges from 1 to j.

The set of absolute_agent_best is therefore the set of agents who's skills and associated expertise are an exact match with those required to perform trans_x. with an exact match, we can be sure that the center as a whole will not experience either the under-skilled agent problem or the over-skilled agent problem. In practice however, few matches are likely to be exact, and so the preferred embodiment of the present invention implements a method for comparing agents to each other in order to determine which of them is best able to handle a given transaction. We will refer to this method as skills scoring, and it will be based on calculating how close each agent is to being the absolute_agent_best for a given transaction; in this sense, an agent's skills score (relative to a transaction) can be thought of as the difference between the agent's skills and corresponding levels, and the absolute_agent best's skills and corresponding levels. In this manner, the problems of over-skilled agents and under-skilled agents can be minimized as much as possible for any given transaction.

As described above, one of the major limitations of current ACD systems is that they treat all agents in an ACD group as if they were equally skilled to perform all transactions delegated to the group. The preferred embodiment of this invention avoids any such limitations by providing the skills inventory database 206 within the switch 50, which contains skills-related information about each agent. Each time an agent selection decision or a transaction selection decision needs to be made, the transaction dispatcher 208 can access the information in the skills inventory database 206 in order to be able to make delegation decisions which minimize the negative effects of the under skilled agent and over skilled agent.

Information about the skills each agent possesses is stored in the skills inventory database 206 in the agent's resume. A resume is a formal listing of the skills that an agent possesses. It describes both the level of ability achieved in each skill (i.e. expertise), as well as the level of preference that call center management has, to have the agent handle transactions that require that particular skill versus transactions which require other skills.

In the preferred embodiment, the skills inventory database 206 is implemented using a relational database model. It is therefore comprised of several tables of definitions (which are generally disclosed in Appendix A below). The tables are as follows:
1) Skills table
2) Agents table
3) Resume_details table

The skills table contains a list of all of the valid values for a "skill" in the particular call center using the preferred embodiment of the present invention. A skill is a job or area of expertise in which an agent has competence or experience. In addition, for the purpose of the preferred embodiment, a skill may be further defined as being unique to an individual or common to various individuals, thereby creating a team. For example, a skill may be defined as an agent's name, say bob_skill. Queuing transactions for particular individuals could then be achieved by requesting bob_skill when enqueing the transaction. As only Bob has bob_skill, the call is effectively queued for Bob. Similarly, teams may be created by giving various people a skill such as sales. All members of the company's sales organization could in this way be designated as having the skill sales, thereby creating a team.

Teams (in the sense used in this description) provide the advantages of prior art ACD groups, without the limitations of the prior art systems.

The agents table contains a list of all of the agents in the call center. For each agent it records a number of important pieces of information. In the present discussion, we are primarily concerned with how it is used to access agent resumes. This is accomplished by use of the resumecode field. Specifically, associated with each agent in the agents table, is a resumecode field which is a key into the resume_details table. In this manner, a computer program which knows the identifier of an agent, can query the agents table, to find out the identifying key used to look up that agent's skills in the resume_details table (i.e. the resumecode).

For each skill which an agent possesses, there will be one row in the resume_details table, which details the identifier of the skill (to reference back to the skills table), and the agent's resumecode (to reference back to the agents table). In addition, the resume_details table contains the following information:
1) Skill level: the skill level is the level of knowledge or expertise that a particular agent has achieved in a given skill. Skill levels are rated on a scale of 1 to 9, with 9 being the highest (i.e. greatest level of expertise).
2) Skill preference: a skill preference is a relative weighting of call center management's desire to have a particular agent handle transactions requiring a particular skill. Skill preferences can be used to reserve uniquely qualified agents for handling calls that require their particular expertise. Consider the example of an agent who possesses the following three skills: SkillA, SkillB, and SkillC. If many other agents in the center have been well-trained to handle transactions using SkillA and SkillB, but only this agent has SkillC, call center management might place a higher preference on SkillC for this agent. Thus, only when no transactions are enqueued requesting SkillC, will the agent handle calls requesting SkillA or SkillB. Skill preferences are rated on a scale of 1 to 9 with 9 being the highest (i.e most preferred by call center management for this agent to handle).
3) Excluded flag: the excluded flag denotes whether or not a particular skill is an excluded skill for a particular agent. Excluded skills are skills in an agent's resume that the agent is not permitted to handle under any circumstances. For example, in a commission-based sales organization, it may be necessary to restrict certain individuals from handling certain types of calls (e.g. they may not have proper professional certification, and so selling certain products might be illegal).

Not only is the skills inventory database 206 used to store information about the skills possessed by agents, but it is also used to store information about the skills required by transactions (these are stored in the skill_expression table). For each uncompleted transaction currently being handled by the switch, a skills requirement will be associated with it in the skills inventory database 206. A skills requirement expresses the complete set of skills required to complete a particular transaction, by providing both mandatory and optional skill expressions.

A skill expression is a simple formalism for stating the skills required for a particular transaction, which obeys the following context-free grammar:

| | |
|---|---|
| Skillexpression | -> skillexprelement skillexpression |
| Skillexprelement | \| ( skillexprelement ) |
| | \| not skillexprelement |
| | \| skillexprelement and skillexprelement |
| | \| skillexprelement or skillexprelement |
| | \| skillname , skilllevel |
| | \| <null> |
| Skillname | -> <a skillname from skills inventory> |
| Skilllevel | -> 1 \| 2 \| 3 \| 4 \| 5 \| 6 \|7 \|8 \| 9 |

An example of a skill expression based on this grammar is:
Spanish,5 and stocks,5 and bonds,2

This skill expression expresses a requirement for an agent with a level of expertise of 5 in Spanish, who also has a level of expertise of 5 in the skill of stocks, and who also has a level of expertise of 2 in the skill of bonds. (an alternative embodiment of this invention may allow the character "&" to be substituted for the "and" operator, the character "|" to be substituted for the "or" operator, and the character "!" To be substituted for the "not" operator).

A skills requirement consists of both a mandatory and an optional skill expression, in order to allow call center management the flexibility of directing that the same type of transaction be routed one way during normal conditions, and another way during heavy loading periods. Consider for example a call center which has as a business objective, the desire to answer every inbound call within sixty seconds. Management of such a center may desire to have the matching methods consider a complex skill expression as long as the call hasn't yet waited in queue more than the targeted sixty seconds. After that time, they may value timeliness over closeness of match, and so wish to have the switch use a much simpler, less demanding skill expression. Let us therefore define mandatory and optional skill expressions as follows:
Mandatory skill expression: the mandatory skill expression is a skill expression that describes the skills that are mandatory in order to handle a particular transaction. Mandatory skills are always required and the transaction can never be handled by an agent who does not possess the mandatory skills (i.e. during the evaluation of a skill or preference score, agents without the mandatory skills will be considered by the scoring methods as being not suitable).
Optional skill expression: the optional skill expression is a skill expression that describes skills which call center management would like the agent to have before they handle a particular transaction, but which are not mandatory in order for them to complete it successfully. Optional skills are considered mandatory for a particular transaction until the transaction becomes starved, at which time the optional skill requirements are relaxed (i.e. optional skills are considered during the evaluation of a skill score or preference score, but if an agent does not satisfy the skill requirement, he/she will not be found to be not suitable).

Each time the ACD system 100 adds a new transaction to its existing workload, the transaction is assigned an initial priority, as an indication of this new transaction's relative importance as compared to the existing workload. The priority mechanism used in this method is similar to that of traditional ACD systems, but is used much differently (e.g. only in the case of a tied skill match will priorities be considered by the matching methods). The use of priority levels in the preferred embodiment of this invention is also intended to ensure that transactions can not wait in the queue 202 indefinitely. To achieve this result, firstly there is a mechanism provided for regularly increasing the priority of all queued transactions as the length of time in the queue 202 increases. In other words, after a period of time T, the priority of a transaction X is increased from some initial value P1, by an increment i, so that after the first interval, the priority level is P=P1+i, after the second interval P=P1+2i, and so on (each of the values P1, T, and i can be set by call center management to quantities that work well in a particular business context ). Secondly, call center management can set a specially defined priority level called the starvation threshold; once a transaction has a priority greater than the starvation threshold, it is considered to be starved for attention. When transactions become starved, optional skills are still considered in trying to locate the best possible match, however, they are no longer mandatory. In this manner, a starved call is much more likely to find a suitable agent, and so be processed sooner.

Call center management can indicate to the transaction dispatcher 208 how rigorous the evaluation of the skill requirement should be once a given call becomes starved. The mandlevel flag indicates whether skill levels are mandatory once a transaction becomes starved or not. If this flag is set, then even when a transaction is starved, the agent must have the requested level of skill in the mandatory skills to be eligible to handle the call. If the flag is not set, then the agent must still have the skill, but not necessarily at the required level - a lower level will be accepted .

Finally, we also note that transactions can also be assigned priority classes. Priority classes allow a company to provide different levels of service to different customers. A transaction in a higher priority class will always be assigned ahead of a transaction in a lower priority class (assuming a sufficiently skilled agent is there to accept the transaction). This means that a highly skilled agent may be under-utilized when handling a transaction in a higher priority class, so this capability should be used sparingly to maximize the benefits of the matching methods.

The preferred embodiment of the present invention is preferably able to make workable, timely, agent selection decisions and transaction selection decisions. As an improvement upon current ACD systems, the preferred embodiment of the present invention includes the following four methods for making such decisions, each of which makes use of the skills inventory database 206 in order to minimize the traditional limitations caused by the under-skilled agent and the over-skilled agent problems described above. These methods are:
4) P: preference-only
5) S: skill-only
6) P/S: preference over skill
7) S/P: skill over preference

These methods are referred to as matching methods, because they are used to match agents to transactions. They are based on the assumption that each agent in the call center has a resume in the skills inventory database 206, and that each transaction of work in the call center (whether it be as a result of an inbound call which is answered by the center, or an outbound call which has been, or is about to be, dialed by the center), has an associated skills requirement (as defined above).

Each of these methods involves the calculation of skill scores and preference scores, which are defined as follows:
Skill score: is the closeness of the match between the skills and their associated levels, as possessed by an agent, and the skills and their associated levels as required to complete a transaction. In other words, the skill score is a numeric measure of how close the agent's resume matches the skill requirement of the call. The closer the skill score is to zero, the better the match. This is in keeping with the discussion above regarding finding the best agent, which states that the skill score is the difference between a particular agent and the absolute_best_agent (since a difference of zero would indicate that a particular agent is an absolute_best_agent). Positive scores indicate an over-qualified agent while negative skill scores indicate an under-qualified agent.
Preference score: is a measure of the preference that call center management has for having a particular agent handle a particular transaction. The higher the preference score. The greater the desire of call center management to have that agent work on that particular transaction over other types of transactions.

These two factors, skill score and preference score, can be combined in four different ways to produce the four unique matching methods listed above, each of which provides a valuable method for making agent selection decisions and transaction selection decisions. These four methods may produce different matching results under different conditions, and the center can choose to use any one of the four at any time, whichever provides them the best results given their business goals.

Under each of the four methods, there are two scenarios to consider:
1) Matching transactions to agents (i.e. making the agent selection decision):
   this scenario occurs when a transaction arrives in the call center and one or more agents is available to handle the transaction (see the process block 328 of Figure 3).
2) Matching agents to transactions (i.e. making the transaction selection decision):
   this scenario occurs when one or more transactions are waiting in queue and an agent becomes available to handle a transaction (see the process block 358 of Figure 3).

The present invention comprises a preference-only method. This method considers only agent preferences for transactions requiring specific skills. Skill levels are not considered at all. The preference-only method can be thought of as follows:

If a transaction exists in queue requiring skills for which the agent has a higher preference level, the agent will take that transaction over a transaction waiting in queue for which the agent has a lower preference level.
and
If a transaction arrives and multiple agents are available to handle the call, the transaction will be assigned to the agent who has a higher preference level for the skills required by the call.

For the agent selection decision, the following steps are performed:
1) Build a temporary list of all available agents (List A). This list is ordered by the amount of time an agent has been idle. In the case of a tie, the Agent who has been idle the longest will receive transaction X (i.e. if two or more equally skilled Agents are vying for the same transaction, then default to the longest idle agent strategy to choose a single agent from amongst them).
2) Step through the temporary list of agents (List A):
   Analyze each agent and compare the agent against the new transaction's skill requirement to determine a preference score for each agent. Disqualify all agents with preference scores less than the agent(s) with the highest preference score from
   List A. The remaining agents are those tied with the highest preference score, and they comprise a list A2.
3) Select an Agent:
   If there are no entries in the list A2, then transaction X remains in queue until other agents become available (i.e. no agent is selected during this step).
   If there is only one agent in list A2, then transaction X is assigned to that agent.
   If there is more than one agent in list A2, then transaction X is assigned to the agent in list A2 which has been idle the longest.

For the transaction selection decision, the following steps are performed:
1) Build a temporary list of all transactions waiting in queue (List T) .
   This list is ordered by the priority of the transaction. In the case of a tie (two calls with equal priority) the transaction that has been waiting in queue the longest will be handled first.
2) Step through the temporary list of transactions (List T) :
   Analyze each transaction and compare it against the single available agent to determine a preference score for each transaction. Disqualify all transactions with preference scores less than the transaction(s) with the highest preference score from list T. The remaining transactions are those tied with the highest preference score, and they comprise a list T2.
3) Assign the agent to the transaction with the highest preference score.
   If there are no entries in the list T2, then agent A is not assigned a transaction, and therefore remains available.
   If there is only one transaction in list T2, then that transaction is assigned to Agent X.
   If there is more than one transaction in list T2, then the one which has been waiting longest in the queue is assigned to Agent A.

The preference-only method can be advantageously used when the following are true:
1) Skill levels are not important to call center management
2) Call center management has strong preferences about which skills each agent should be using to handle transactions.
3) Incoming transactions have varying skill requirements.

Figures 4A and 4B are flow charts illustrating the skill-only method. This method considers only agents' levels of skill. The method does not consider call center management's preferences regarding which skills an agent should use. The skills-only method can be thought of as follows :
If transactions are waiting in queue, and an Agent becomes
   available, the Agent will be assigned the transaction with which the
Agent has the closest skills match.
and
If a transaction arrives and multiple Agents are available to handle the transaction, it will be assigned to the Agent with which the transaction has the closest skills match.

Note that the closest skills match means that the under-skilled agent and over-skilled agent problems described above are substantially minimized by using attempting to find the best agent, by deriving a skills score for each agent, relative to a particular transaction. For example, if a transaction requires a skill level of 3 in a particular skill, and one agent has a skill level of 3 in that skill, and another agent has a skill level of 4 in the same skill, the transaction will be assigned to the agent with the level 3 skill. This will leave the agent with the level 4 skill available to handle any calls that require a higher skill level.

For the agent selection decision, the following steps are performed:
1) Build a temporary list of all available Agents (List A) :
   This list is ordered by the amount of time an Agent has been idle. In the case of a tie, the Agent who has been idle the longest will receive transaction X (i.e. if two or more equally skilled Agents are.vying for the same transaction, then default to the longest idle agent strategy to choose a single agent from amongst them).
2) Step through the temporary list of Agents (List A):
   Analyze each Agent's resume and compare it to the new transaction's skill requirement to determine a skill score for each agent. See the description of the calculation of skill scores below. Disqualify all Agents with skill scores less than the Agent(s) with the highest skill score from list A. The remaining Agents are those tied with the highest skill score, and they comprise a list A2.
3) Select an agent:
   If there are no entries in the list A2, then transaction X remains in queue until other agents become available (i.e. no agent is selected during this step).
   If there is only one agent in list A2, then transaction X is assigned to that agent.
   If there is more than one agent in list A2, then transaction X is assigned to the agent in list A2 which has been idle the longest.

For the transaction selection decision, the following steps are performed:
1) Build a temporary list of all transactions waiting in queue (List T).
   This list is ordered by the priority of the transaction. In the case of a tie (two calls with equal priority) the transaction that has been waiting in queue the longest will be handled first.
2) Step through the temporary list of transactions (List T):
   Analyze each transaction and compare it against the single available Agent to determine a skill score for each transaction. Disqualify all transactions with skill scores less than the transaction(s) with the highest skill score from list T. The remaining transactions are those tied with the highest skill score, and they comprise a list T2.
3) Assign the agent to the transaction with the highest skill score.
   If there are no entries in the list T2, then agent A is not assigned a transaction, and therefore remains available.
   If there is only one transaction in list T2, then that transaction is assigned to agent X.
   If there is more than one transaction in list T2, then the one which has been waiting longest in the queue is assigned to agent A.

The skill-only method can be advantageously used when the following are true:
1) Call center management believes that preference levels are not relevant to how calls are managed in the center.
2) Agents have differing levels of expertise in various skills.
3) Incoming transactions have varying skill requirements.

The present invention also comprises the preference/skill method. The preference/skill method provides two refinements to the preference-only method, as follows :
1) In the case of two or more agents having equal preference scores, their respective skill scores are used to break the ties.
2) Agents must satisfy the skill scoring requirements to handle the call.

For the agent selection decision, the following steps are performed:
1) Build a temporary list of all available Agents (List A). This list is ordered by the amount of time an Agent has been idle. In the case of a tie, the Agent who has been idle the longest will receive transaction X (i.e. if two or more equally skilled Agents are vying for the same transaction, then default to the longest idle agent strategy to choose a single Agent from amongst them).
2) Step through the temporary list of Agents (List A):
   Analyze each Agent and compare the Agent against the new transaction X to determine a preference score for each Agent. Disqualify all Agents with preference scores less than the Agent(s) with the highest preference score from List A. The remaining Agents are those tied with the highest preference score, and they comprise a List A2.
3) Try to select an Agent:
   If there are no entries in the List A2, then transaction X remains in queue until other Agents become available (i.e. no Agent is selected during this step).
   If there is only one Agent in List A2, then transaction X is assigned to that Agent, and no further processing is required (i.e. do not proceed to step 4) below).
   If there is more than one Agent in List A2, then continue to the next step.
4) Step through the list of Agents tied with the highest preference score (List A2):
   Analyze each Agent and compare the Agent against the new transaction X to determine a skill score for each agent.
   Eliminate any Agents who are not qualified to handle the transaction based on the skill score. The remaining Agents comprise the List A3.
5) Select an Agent:
   If there are no entries in the List A3, then none of the Agents with the currently highest value for preference score have the necessary skills to handle transaction X. From the List A, remove all of the Agents in List A3, to create a new version of
   List A. If the number of Agents in the new List A is zero, then there are currently no available Agents capable of working on transaction X, so it remains in queue until other Agents become available (i.e. no Agent is selected during this step). If however, the number of Agents in the new List A is greater than zero, then repeat this method, starting from step 2) above.
   If there is only one Agent in List A3, then transaction X is assigned to that Agent.
   If there is more than one Agent in List A3, then transaction X is assigned to the Agent in List A3 who has the highest skill score (for this transaction). If several Agents are tied with the highest skill score, then the one which has been idle the longest is selected.

For the agent selection decision, the following steps are performed:
1) Build a temporary list of all transactions waiting in queue (List T).
   This list is ordered by the priority of the transaction. In the case of a tie (two calls with equal priority) the transaction that has been waiting in queue the longest will be handled first.
2) Step through the temporary list of transactions (List T):
   Analyze each transaction and compare it against the single available Agent A to determine a preference score for each transaction. Disqualify all transactions with preference scores less than the transaction(s) with the highest preference score from List T. The remaining transactions are those tied with the highest preference score, and they comprise a List T2.
3) Try to select a transaction:
   If there are no entries in the List T2, then Agent A remains available, and all transactions remain in queue (i.e. no transactions is selected during this invocation of the method).
   No further processing is required (i.e. do not proceed to step 4) below).
   If there is only one transaction in List T2, then Agent A is assigned that transaction. No further processing is required (i.e. do not proceed to step 4) below).
   If there is more than one transaction in List T2, then continue to the next step.
4) Step through the list of transactions tied with the highest preference score (List T2):
   Analyze the skill requirements of each transaction and compare it against Agent A's resume to determine a skill score for each transaction relative to this Agent. Eliminate any transactions for which the Agent does not qualify, based on the skill score. The remaining transactions comprise a List T3.
5) Assign the Agent to the transaction with the highest preference score:
   If there are no entries in the List T3, then none of the transactions with the currently highest value for preference score has a skill requirement which can be satisfied by Agent
   A. From the List T, remove all of the transactions in List T3, to create a new version of List T. If the number of transactions in the new List T is zero, then there are currently no transactions for which Agent A is a capable Agent, so Agent A remains available. (i.e. no Agent is selected during this step). If however, the number of transactions in the new
   List T is greater than zero, then repeat this method, starting from step 2) above.
   If there is only one transaction in List T3, then that transaction is assigned to Agent X.
   If there is more than one transaction in List T3, then the one which has the highest skill score (relative to Agent A) is selected. If several transactions are tied with the highest preference score, then the one which has been waiting longest in the queue is assigned to Agent A.

The preference/skill method can be advantageously used when the following are true:
1) Agents in the center have different levels of expertise in different skills, and call center management has preferences regarding which skills each agent should use.
2) The preferences that call center management has, regarding which skills an agent generally uses to perform his job, is more important for making routing decisions than the exact level of expertise that agents have for the various skills.
3) It is important that agents must still be qualified to handle a transaction, even if call center management has a preference for certain agents for the required skill.
4) Incoming calls require differing levels of expertise in various skills.

Figure 5 is a flow chart illustrating the skill/preference method. The skill/preference method provides the following refinement to the skill-only method, as follows:
1) In the case of two or more Agents with equal skill scores, preference scores will be used to break the ties.

For the agent selection decision, the following steps are performed:
1) Build a temporary list of all available Agents (List A) :
   This list is ordered by the amount of time an Agent has been idle. In the case of a tie, the Agent who has been idle the longest will receive transaction X (i.e. if two or more equally skilled Agents are vying for the same transaction, then default to the longest idle agent strategy to choose a single Agent from amongst them).
2) Step through the temporary list of Agents (List A):
   Analyze each Agent's resume and compare it to the new transaction's skill requirement to determine a skill score for each Agent. Disqualify all Agents with skill scores less than the Agent(s) with the highest skill score from List A. The remaining Agents are those tied with the highest skill score, and they comprise a List A2.
3) Try to select an Agent:
   If there are no entries in the List A2, then transaction X remains in queue until other Agents become available (i.e. no Agent is selected during this step).
   If there is only one Agent in List A2, then transaction X is assigned to that Agent, and no further processing is required (i.e. do not proceed to step 4) below).
   If there is more than one Agent in List A2, then continue to the next step.
4) Step through the list of Agents (A2):
   Analyze each Agent and compare the Agent against the new transaction X to determine a preference score for each agent.
   Eliminate any Agents who are not qualified to handle the transaction based on the preference. The remaining Agents comprise the List A3.
5) Select an Agent:
   If there are no entries in the List A3, then transaction X remains in queue until other Agents become available (i.e. no Agent is selected during this step).
   If there is only one Agent in List A3, then transaction X is assigned to that Agent.
   If there is more than one Agent in List A3, then transaction X is assigned to the Agent in List A3 who has the highest preference score (for this transaction). If several Agents are tied with the highest preference score, then the one which has been idle the longest is selected.

For the agent selection decision, the following steps are performed:
1) Build a temporary list of all transactions waiting in queue (List T).
   This list is ordered by the priority of the transaction. In the case of a tie (two calls with equal priority) the transaction that has been waiting in queue the longest will be handled first.
2) Step through the temporary list of transactions (List T): Analyze each transaction and compare it against the single available Agent's resume to determine a skill score for each transaction. Disqualify all transactions with skill scores less than the transaction(s) with the highest skill score from List T. The remaining transactions are those tied with the highest skill score, and they comprise a List T2.
3) Try to select a transaction:
   If there are no entries in the List T2, then Agent A remains available, and all transactions remain in queue (i.e. no transactions is selected during this invocation of the method).
   No further processing is required (i.e. do not proceed to step 4) below).
   If there is only one transaction in List T2, then Agent A is assigned that transaction. No further processing is required (i.e. do not proceed to step 4) below).
   If there is more than one transaction in List T2, then continue to the next step.
4) Step through the list of transactions tied with the highest preference score (List T2):
   Analyze the skill requirements of each transaction and compare it against Agent A's resume to determine a preference score for each transaction relative to this Agent. Eliminate any transactions for which the Agent does not qualify, based on the preference score. The remaining transactions comprise a List T3.
5) Assign the Agent to the transaction with the highest skill score.
   If there are no entries in the List T3, then Agent A is not assigned a transaction, and therefore remains available.
   If there is only one transaction in List T3, then that transaction is assigned to Agent X.
   If there is more than one transaction in List T3, then the one which has the highest preference score (relative to Agent A) is selected. If several transactions are tied with the highest preference score, then the one which has been waiting longest in the queue is assigned to Agent A.

The skill/preference method can be advantageously used when the following are true:
1) Agents in the center have different levels of expertise in different skills, and call center management has preferences regarding which skills each Agent should use.
2) The preferences that call center management has, regarding which skills an agent generally uses to perform their job, is less important for making routing decisions than the exact level of expertise that agents have for the various skills.
3) It is important that agents must still be qualified to handle a transaction, even if call center management has a preference for certain agents for the required skill.
4) Incoming calls require differing levels of expertise in various skills.

Skill Scores are calculated by taking each skill in a skill expression and comparing it against a particular Agent's resume. Skill expressions are evaluated from left to right unless parentheses are used to alter the order of evaluation.

After each skill expression in a skill requirement (mandatory and optional) has been evaluated individually, the final cumulative score, which we refer to as the skill score, is the sum of the mandatory and optional scores. If a Skill score is negative, it is penalized by multiplying it by a penalty factor (e.g. -1000). This is because it is preferred that an Agent be overqualified rather than underqualified in handling the call. Applying the penalty factor serves to put any underqualified Agents after any qualified agents.

The highest skill score then, is the score that is closest to 0, with scores above the absolute value of the penalty factor indicating underqualified Agents and scores below the absolute value penalty factor indicating qualified (or overqualified) Agents.

The following table summarizes the rules used for scoring individual skills in a skills expression, in order to derive a skill score. Specifically, it demonstrates how to derive a skill score (SS) for a single skill, for a particular Agent:

| | | | | |
|---|---|---|---|---|
| Agent's Suitability for Transaction X | If Agent doesn't have skill | If Agent has Skill at at least the required level | If Agent has skill but at a lower level than required level | If Agent has skill listed in Resume as "excluded" |
| State of Transaction X | | | | |
| Not Starved, Mandatory | Agent Not Suitable | SS=Agent's level of skill in resume minus Requested level | Agent Not Suitable | Agent Not Suitable |
| Not Starved, Optional | Agent Not Suitable | SS=Agent's level of skill in resume minus Requested level | Agent Not Suitable | Agent Not Suitable |
| Starved, Mandatory, MandLevel Set | Agent Not Suitable | SS=Agent's level of skill in resume minus Requested level | Agent Not Suitable | Agent Not Suitable |
| Starved, Mandatory, MandLevel Clear | Agent Not Suitable | SS=Agent's level of skill in resume minus Requested level | SS=Agent's level of skill in resume minus Requested level(may be negative) | Agent Not Suitable |
| Starved, Optional | SS=zero minus Requested Level (will be negative) | SS=Agent's level of skill in resume minus Requested level | SS=Agent's level of skill in resume minus Requested level(may be negative) | Agent Not Suitable |
| Skill modified by "NOT" (!) operator | SS=zero | Agent Not Suitable | Agent Not Suitable | SS=zero |

If two operands are separated by the AND operator and either operand is "Not Suitable", the result of the AND is "Not Suitable". If two operands are separated by the AND operator and neither operand is "Not Suitable", the result of the AND operation is the sum of the operands. If a score is negative, it is penalized by multiplying it by a penalty factor ( e.g. -1000). This is because it is preferred that an Agent be overqualified rather than underqualified in handling the call. Applying the penalty factor serves to put any underqualified Agents after any qualified agents.

If two operands are separated by the OR operator and both operands are "Not Suitable" the result of the OR is "Not Suitable". If two operands are separated by the OR operator and either operand is "Not Suitable" the result of the "OR" is the other operand. If two operands are separated by the OR operator and neither operand is "Not Suitable" the result of the "OR" is the lowest number that is greater than or equal to zero. If a score is negative, it is penalized by multiplying it by a penalty factor (e.g. -1000). This is because it is preferred that an Agent be overqualified rather than underqualified in handling the call. Applying the penalty factor serves to put any underqualified Agents after any qualified agents.

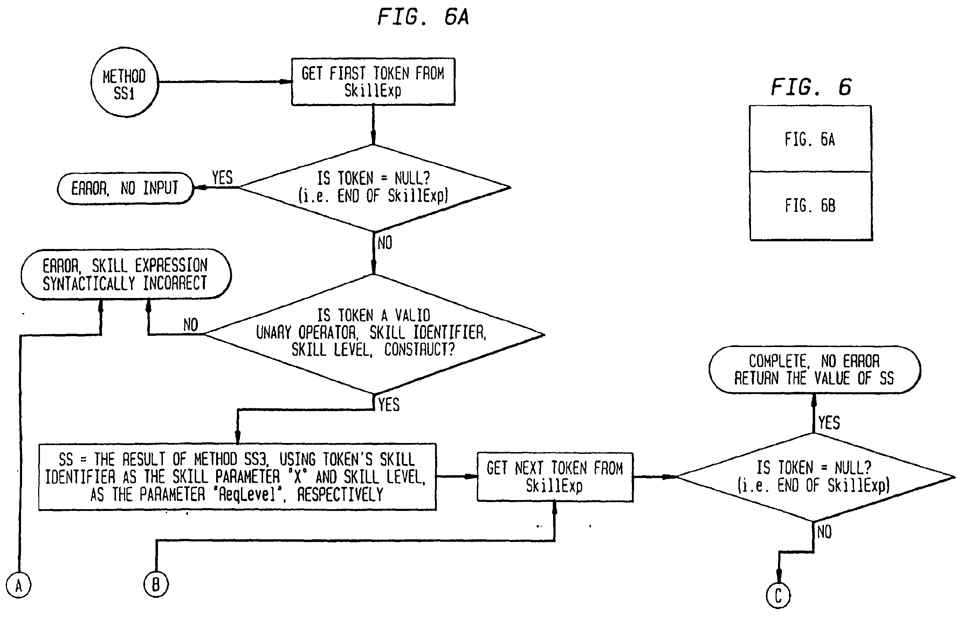

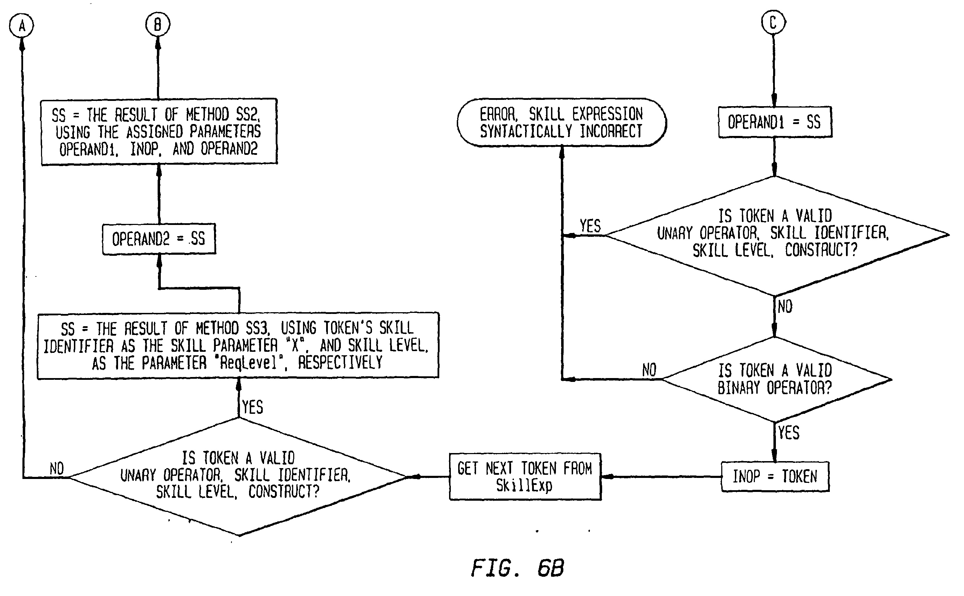

Figure 6 is a flow chart illustrating a method of the preferred embodiment of the present invention for calculating a skill score for a skill expression without parentheses. The method calculates the skill score (SS) for a given Agent A and a given skill expression, which does not contain parentheses. The inputs to the method include the following:
SkillExp: The character string representation of a skill expression.
   A: A reference to a single Agent.
   T: A reference to the transaction for which SkillExp is part of the skill requirement.

The method of Figure 6 has the following intermediate results:
Operand1: A skill score derived from a part of a skill expression.
Operand2: A skill score derived from a part of a skill expression.
InOp: A value indicating which logical operation to perform upon the two operands, Operand1 and Operand2. The only acceptable values are "AND" to indicate the AND operation, or "OR" to indicate the OR operation.

The method of Figure 6 has the following outputs:
If, as a result of evaluating the skill expression, Agent A has not been disqualified from handling transaction T (i.e. is still considered suitable), then SS is a defined integer result, containing the skill score.
If Agent A has been disqualified, then this result is returned implicitly, and SS is undefined.
If there is an error in the input (a result which is returned implicitly), then SS is undefined.

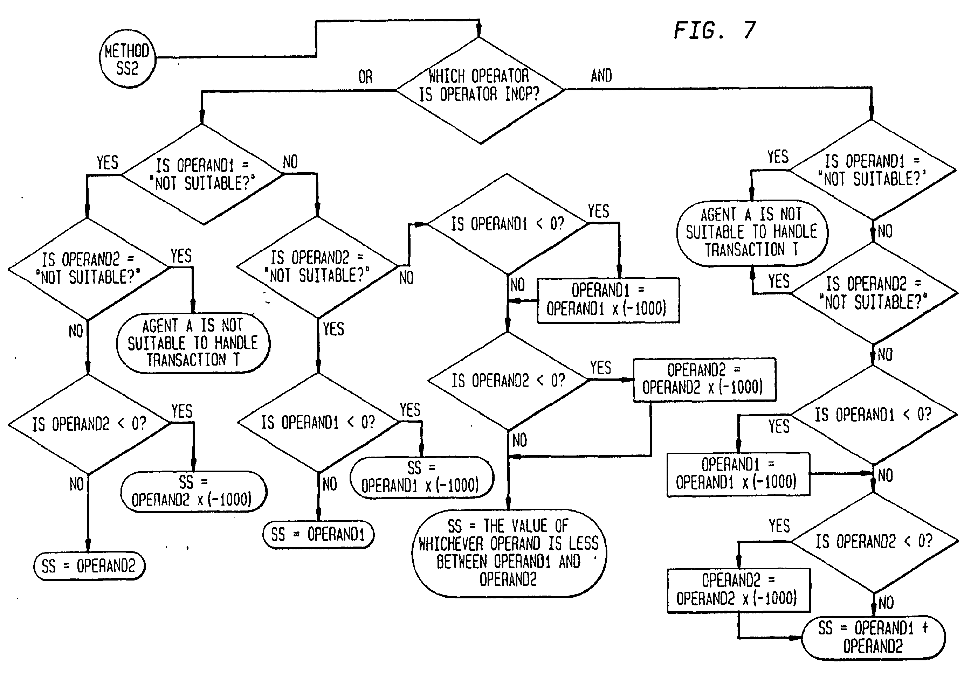

Figure 7 is a flow chart illustrating a method of the preferred embodiment of the present invention for calculating a skill score for a skill expression containing AND operators and OR operators. The method of Figure 7 calculates a skill score (SS) for a given Agent A, given two operands, Operand 1, and Operand2, which are each skill scores, and either the operator AND or the operator OR. The method of Figure 7 has the following inputs:
A: A reference to a single Agent.
Operand1 A skill score derived from a part of a skill expression.
Operand2: A skill score derived from a part of a skill expression.
T: A reference to the transaction from which Operand1 and Operand2 are partially derived results (i.e. they represent a partial derivation of this transaction's skill requirement).
InOp: A value indicating which logical operation to perform upon the two operands, Operand1 and Operand2. The only acceptable values are "AND" to indicate the AND operation, or "OR" to indicate the OR operation.

The method of Figure 7 has the following outputs:
If the result of the logical operation is that the skill score does still indicate that Agent A is suitable to handle the skills inherent in the evaluation of the partial skill expression "Operand1 InOp Operand2", then SS is a defined integer result, containing the skill score.
If Agent A is not suited to these skills, then this result is returned implicitly, and SS is undefined.

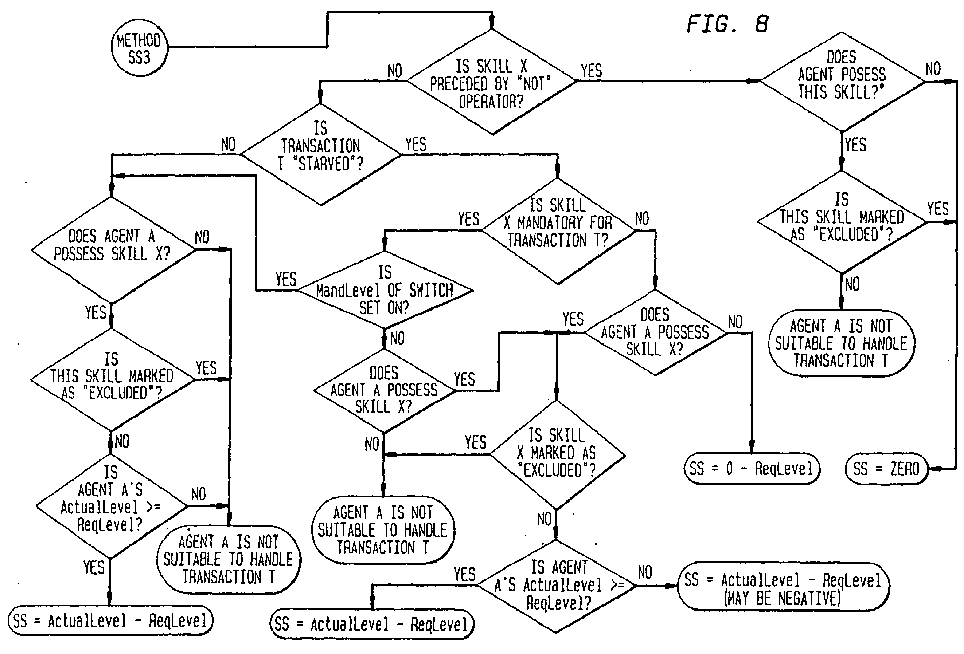

Figure 8 is a flow chart illustrating a method of the preferred embodiment of the present invention for calculating a skill score for a specific agent, Agent A, and a specific skill, Skill X. The method of Figure 8 has the following inputs:
A: A reference to a single Agent.
X: A reference to a single Skill
T: A reference to the transaction from which Skill X has been selected (i.e. X is part of this transaction's skill requirement).
ReqLevel: The requested level of expertise for Skill X, as found in transaction T's skill requirement.
ActualLevel: The actual level of expertise for Skill X that Agent A possesses, as found in Agent A's resume.
MandLevel: A flag indicating whether or not the MandLevel feature is turned on in the switch.

The method of Figure 8 has the following outputs:
If Agent A is suited to handle Skill X, then SS is a defined integer result, containing the skill score.
If Agent A is not suited to handle Skill x, then this result is returned implicitly, and SS is undefined.

As an example of the method for skill scoring, assume the following two agents are available :

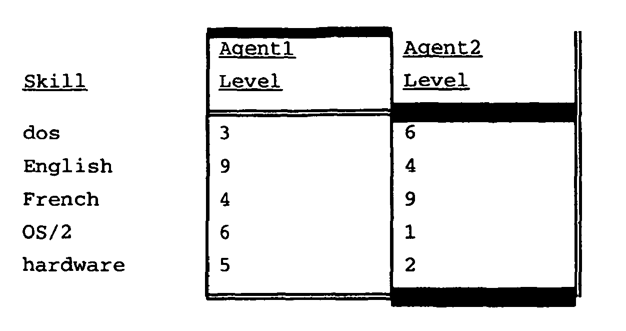

Assume further that the following transactions arrive in the queue:

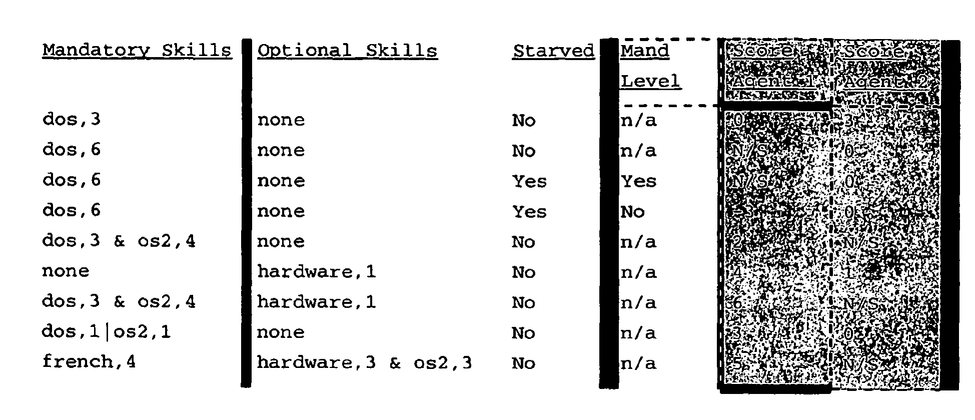

Note that the lowest score that is greater than or equal to zero is the best.

Preference Scores are calculated by taking each skill in the skill expression and comparing it against the Agent's resume. Skill expressions are evaluated from left to right unless parentheses are used to alter the order of evaluation.

The following table summarizes how the preference score P, for an individual skill S is calculated:

| | | | |
|---|---|---|---|
| Agents Suitability for Transaction X | Management doesn't have a preference for Agent to do skill | Management does have a preference for Agent to do skill | If Agent has skill listed in Resume as "excluded" |
| State of Transaction Xs | | | |
| Not Starved, Mandatory | Agent Not Suitable | P=preference level in Agent's Resume | Agent Not Suitable |
| Not Starved, Optional | Agent Not Suitable | P=preference level in Agent's Resume | Agent Not Suitable |
| Starved, Mandatory | Agent Not Suitable | P=preference level in Agent's Resume | Agent Not Suitable |
| Starved, Optional | P=zero | P=preference level in Agent's Resume | Agent Not Suitable |
| Skill modified by NOT (!) operator | P=zero | Agent Not Suitable | P=zero |

If two operands are separated by the AND operator and either operand is "Not Suitable", the result of the AND is "Not Suitable". If two operands are separated by the AND operator and neither operand is "Not Suitable", the result of the AND operation is the highest preference of the two operands.

If two operands are separated by the OR operator and if both operands are "Not Suitable", the result of the OR is "Not Suitable". If two operands are separated by the OR operator and if either operand is "Not Suitable", the result of the OR is the other operand. If two operands are separated by the OR operator and if neither operand is "Not Suitable", the result of the OR is the highest preference of the two operands.

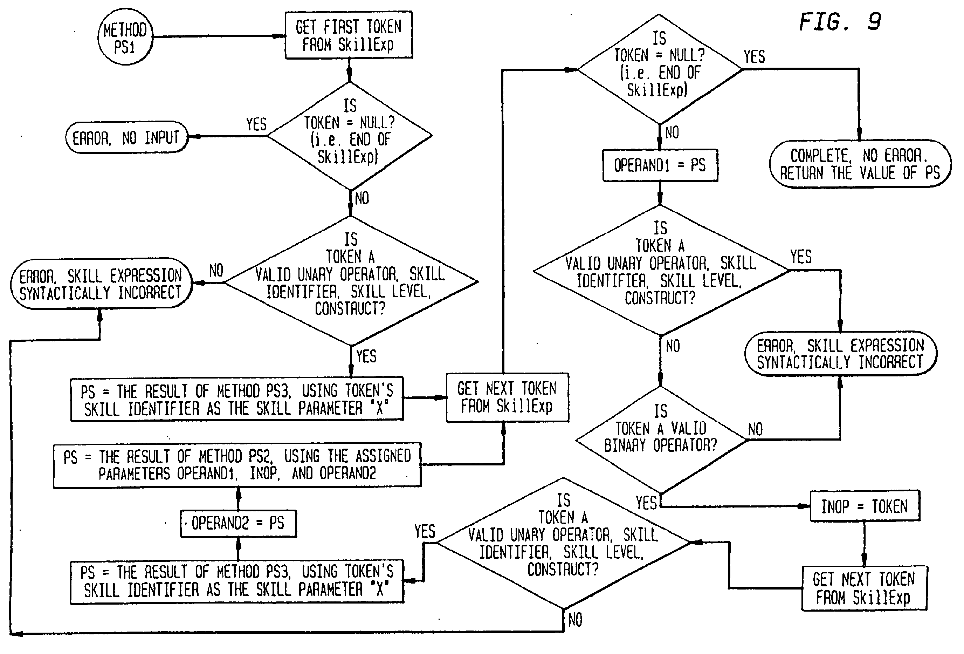

Figure 9 is a flow chart illustrating a method of the preferred embodiment of the present invention for calculating a preference score for a skill expression without parentheses. The method of Figure 9 calculates the preference score (PS) for a given Agent A, given a skill expression which does not contain parentheses. The method of Figure 9 has the following inputs:
SkillExp: The character string representation of a Skill Expression.
A: A reference to a single Agent.
T: A reference to the transaction for which SkillExp is part of the Skill Requirement.

The method of Figure 9 has the following intermediate results:
Operand1: A Preference Score derived from a part of a Skill Expression.
Operand2: A Preference Score derived from a part of a Skill Expression.
InOp: A value indicating which logical operation to perform upon the two operands, Operand1 and Operand2. The only acceptable values are "AND" to indicate the "AND" operation, or "OR" to indicate the "OR" operation.
The method of Figure 9 has the following outputs:
   If as a result of evaluating the Skill Expression, Agent A has not been disqualified from handling transaction T (i.e. is still considered suitable), then PS is a defined integer result, containing the Preference Score.
If Agent A has been disqualified, then this result is returned implicitly, and PS is undefined.
If there is an error in the input (a result which is returned implicitly), then PS is undefined.

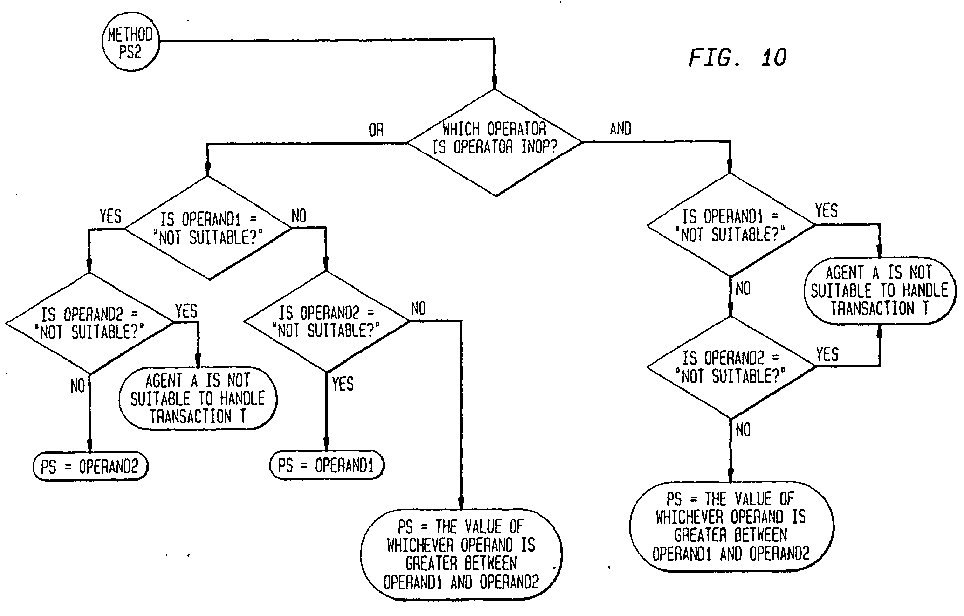

Figure 10 is a flow chart illustrating a method of the preferred embodiment of the present invention for calculating a preference score for a skill expression containing AND operators and OR operators. The method of Figure 10 calculates the preference score (PS) for a given Agent A, given two operands, Operand 1, and Operand2, which are each preference scores, and either the Operator AND or the Operator OR. The method of Figure 10 has the following inputs:
A: A reference to a single Agent.
Operand1: A Preference Score derived from a part of a Skill Expression.
Operand2: A Preference Score derived from a part of a Skill Expression.
T: A reference to the transaction from which Operand 1 and Operand 2 are partially derived results (i.e. they represent a partial derivation of this Transaction's Skill Requirement).
InOp: A value indicating which logical operation to perform upon the two operands, Operand1 and Operand2. The only acceptable values are "AND" to indicate the "AND" operation, or "OR" to indicate the "OR" operation.

The method of Figure 9 has the following outputs:
If the result of the logical operation is that the Preference Score does still indicate that Agent A is suitable to handle the skills inherent in the evaluation of the partial Skill Expression "Operand1 InOp Operand2", then PS is a defined integer result, containing the Preference Score.
If Agent A is not suited to these skills, then this result is returned implicitly, and PS is undefined.

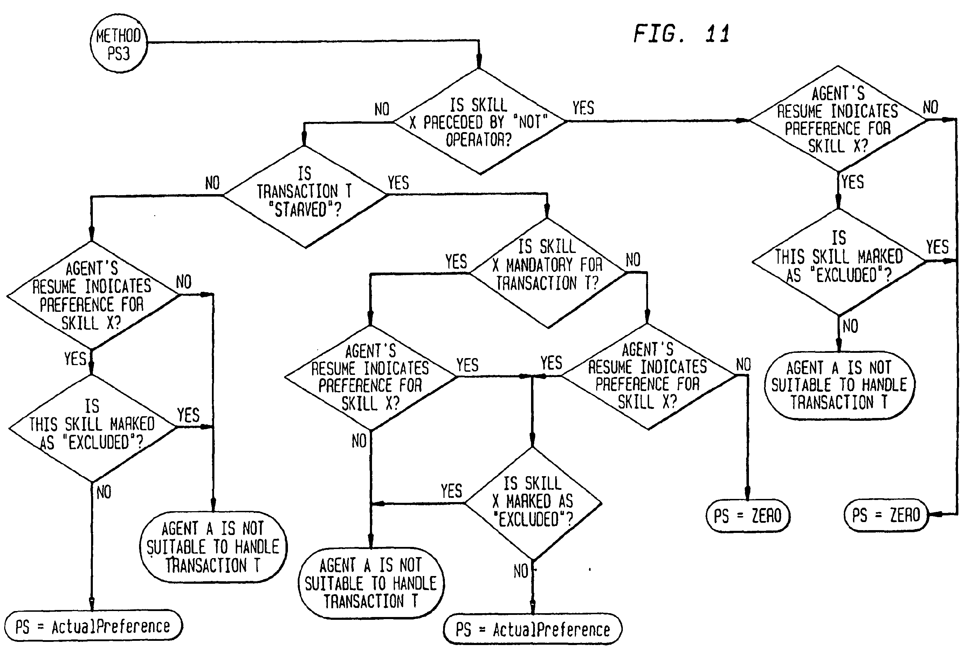

Figure 11 is a flow chart illustrating a method of the preferred embodiment of the present invention for calculating a preference score for a specific agent and a specific skill. The method of Figure 11 calculates the preference score (PS) for a given Agent A, and a single Skill X. The method of Figure 11 has the following inputs:
A: A reference to a single Agent.
X: A reference to a single Skill
T: A reference to the transaction from which Skill X has been selected (i.e. X is part of this Transaction's Skill Requirement).
ActualPreference: The actual level of preference for Skill X that Call Center Management has associated with Agent A, as found in Agent A's resume.
MandLevel: A flag indicating whether or not the MandLevel feature is turned on in the Switch.

The method of Figure 11 has the following outputs:
If Agent A is suited to handle Skill X, then PS is a defined integer result, containing the Preference Score.
If Agent A is not suited to handle Skill X, then this result is returned implicitly, and PS is undefined.

As an example of the method of calculating preference scores, assume the following two Agents are available:

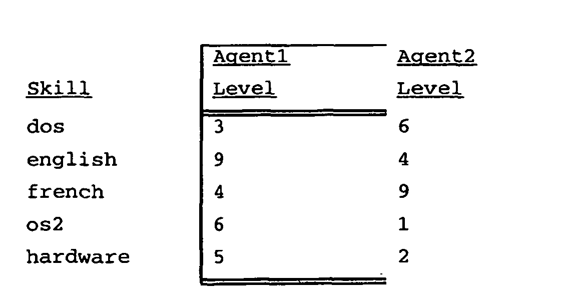

Assume further that the following calls arrive in the queue :

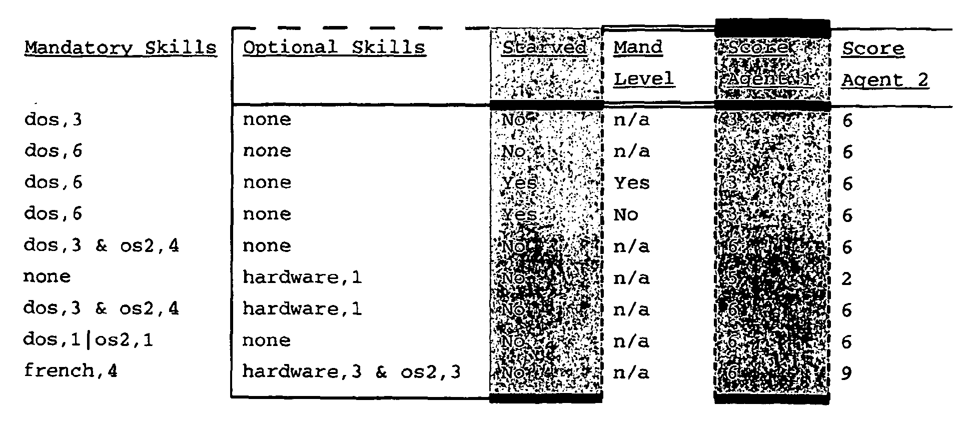

In this example, the highest score is best.

The following two examples illustrate how the four different methods of Figures 4-7 can produce different results for the same calls and the same Agents:

### Example 1: Agents available, transaction arrives in queue

Available agents:

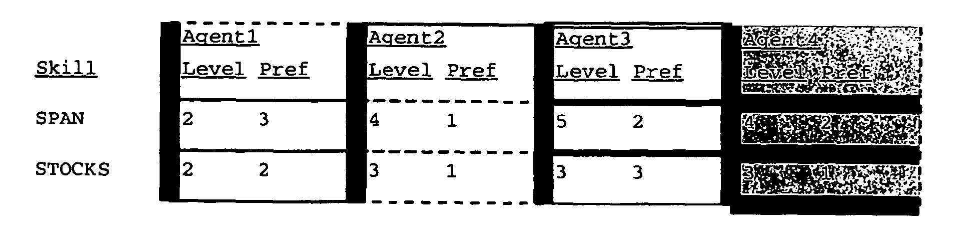

Assume that a call arrives requesting : SPAN,4 & STOCKS,3. The following table provides skill scores, preference scores and idle times:

| | Skill Score | Preference Score | Idle Time (s) |
|---|---|---|---|
| Agent1 | Not Suitable | 3 | 30 |
| Agent2 | 0 | 1 | 25 |
| Agent3 | 1 | 3 | 20 |
| Agent4 | 0 | 2 | 10 |

The following table provides the result for each of the methods of Figures 4-7:

| Method | Result |
|---|---|
| Preference | Agent1 |
| | Agent1 and Agent3 have equal Preference Scores. |
| | Agent1 will get the transaction because he has been idle the longest. |
| Skill | Agent2 |
| | Agent2 and Agent4 have equal skill scores. Agent2 will get the transaction because Agent2 has been idle the longest. |
| Preference/ | Agent3 |
| Skill | Agent1 and Agent3 have equal Preference Scores. |
| | Agent3 has a better skill match so he will get the call. |
| Skill/ Preference | Agent4 |
| | Agent2 and Agent4 have equal skill scores. Agent4 has a higher preference match so Agent4 will get the call. |

### Example 2: Calls in Queue, Agent becomes available

Calls in queue:

| Call | Requested Skills |
|---|---|
| 1 | SPAN,2 |
| 2 | TENNIS,4 |
| 3 | SPAN,5 |
| 4 | SURFING,3 |

Assume that Agent1 becomes available with the following resume:

| Skill | Level | Pref |
|---|---|---|
| SPAN | 6 | 3 |
| SURFING | 3 | 2 |
| TENNIS | 4 | 1 |

The following table provides skill scores, preference scores and times for which the calls have been in the queue(s).

| | Skill Score | Preference Score | Time in queue (s) |
|---|---|---|---|
| Call1 | 4 | 3 | 30 |
| Call2 | 0 | 1 | 20 |
| Call3 | 1 | 3 | 15 |
| Call4 | 0 | 2 | 10 |

The following table provides the result for each of the methods of Figures 4-7:

| Method | Result |
|---|---|
| Preference | Call1 Call1 and Call3 have equal Preference Scores. Agent will take Call1 as it has been in queue the longest. |
| Skill | Call2 |
| | Call2 and Call4 have equal skill scores. Agent will take Call2 as it has been in queue the longest. |
| Preference/ Skill | Call3 |
| | Call1 and Call3 have equal Preference Scores. Agent will take Call3 as it has the better skills match. |
| Skill/ Preference | Call4 |
| | Call2 and Call4 have equal skill scores. Agent will take Call4 as it has a higher Preference Score. |

A person of skill in the art will understand that the present invention can be implemented in various ways that are significantly different from the preferred embodiment.

Skills and Preference Match Scores: The Skills Match and Preference Match Scores provide Call Center managers with a quantitative means to address the "quality of service" and "agent skill utilization" problems discussed above. Viewed from the perspective of the quality of service perspective by the call center overall or individual agents, they enable the call center manager to evaluate how closely they met a caller(s) requirements for a particular transaction(s). Viewed from an agent utilization perspective, they enable call center managers to evaluate how effectively they are utilizing their agents skills (eg: are they over or under qualified) and whether their agents are handling the preferred type of transaction(s) or not.

Skills Match Score: As defined in above for Skill Score, Skill Score is an indicator of the "closeness of the match" or a numeric measure of how close an Agent's Resume matches the Skill Requirement of the call. As with the Skill Score calculated for a call, the Skills Match Score is an indicator of the how over or under-qualified an agent is to handle a call.

Skills Match Score: The Skills Match is the average difference between the skill levels requested by callers and the skill levels of the agents assigned to the calls, for calls that were matched using the Skill Only, Skill Preference, or Preference Skill Methods. It consists of several values:
Skills Match Under-Skilled - The average amount agents were under-skilled.
Skills Match Over-Skilled - The average amount agents were over-skilled.
Before a call is starved it only has a Skills Match Over-Skilled value because the call is only assigned to agents that have the required skill level (or higher) for all skills required by the caller. After a call is starved, both values are provided. Each call can produce both over and under skilled values, as a caller usually requires more than one skill. The agent can be over skilled for one skill and under-skilled for another.

Method of Calculating Skills Match Normal Scores: Use the methods defined above on calculating individual skill scores to calculate SS for each skill in the skills expression for each call that was answered before becoming starved.

Calculate a Skills Match Over-Skilled value (SMOS for each call by summing the individual skills score SS that are greater than zero. Calculate the average SMOS by summing the SMOS for the number of starved calls m and dividing by m.

Method of Calculating Skills Match Starved Scores: Use the methods defined above on calculating individual skill scores to calculate SS for each skill in the skills expression for each call that was answered after becoming starved.

Calculate a Skills Match Under-Skilled value (SMUS) for each call by summing the individual skill scores SS.

Calculate a Skills Match Over-Skilled value (SMUS) for each call by summing the individual skills score SS that are less than zero.

Display the Individual Skills Match Score in the following format: SMUS, SMOS.

Calculate the average SMUS by summing the SMUS for the number of normal calls n and dividing by n.

Calculate the average SMOS by summing the SMOS for the number of normal calls n and dividing by n.

Display the Skills Match Score in the following format: Average SMUS, Average SMOS.

### Example of Calculating Skills Match Starved Scores

For example, assuming that the Skill, Preference matching algorithm is utilized and the call is starved, so the agent does not have to have the required skill levels to handle the call.

A call is enqueued with the following skill expression:
SPANISH,3 & PRODUCT,5 & SERVICE,7

The call is routed to an agent with the following resume:

| Skill | Level | Preference |
|---|---|---|
| SPANISH | 2 | 3 |
| PRODUCT | 8 | 7 |
| PRODUCT B | 5 | 5 |
| SERVICE | 8 | 8 |

The individual Skills Score (SS) is calculated according to the methods defined above on Calculating Skill Scores. The skill levels required by the caller is subtracted from the skill level provided by the agent for each of the skills in the caller's expression. The results are as follows:
For SPANISH, SS=-1
For PRODUCT, SS=+3
For SERVICE, SS=+1

To calculate the individual Skills Match Over-Skilled, the individual skills scores (SS) that are greater than zero are summed. To calculate the individual Skills Match Under-Skilled, the individual skill scores (SS) that are less than zero are summed. In this example, Skills Match Under-Qualified = -1 and Skills Match Over-Qualified = 4.
The Skills Match values for all calls are calculated in the same way and then are averaged together.

The Skills Match values can be used to determine how well your call center is matching agents to calls. The values 0,0 are the best possible values indicating that the caller was handled by Agent_Best as defined above, Theory for Determining the "Best" Agent.

If you have a high negative number, you are not meeting the skill requirements of your callers. This may indicate that you need to train agents to increase their skill levels. If you have a high positive number, your agents are highly overskilled for your callers' requirements, which could mean that most of your skilled agents are on one team or shift.

Preference Match Scores: As discussed in the section on Preference Scores, Preference Score is a measure of the "preference" that a Call Center Manager has for having a particular agent handle a particular transaction. The higher the Preference Score, the greater the desire of a Call Center Manager to have the agent work on that particular transaction over other types of transactions.

Preference Match: Preference Match is the average Preference Score that agents had for calls that were assigned to them, when calls were matched using the Preference Only, Preference Skill, or Skill Preference Matching Methods. As with Preference Score, the higher the Preference Match value the more successful the application was at matching calls to agents based on preferences. The Preference Match Score consists of two values.

Preference Match Normal - The average preference score that agents had for calls that were assigned to them before the calls became starved. Preference Match Starved -The average preference score that agents had for calls that were assigned to them after the calls became starved.

Method of Calculating Preference Match Normal:
1. For all calls that were answered before being starved, calculate PS as defined in section on Methods of calculating Preference Scores.
2. Calculate the average Preference Match Normal value by summing the PS for the number of normal calls n answered and dividing by n.

Method of Calculating Preference Match Starved:
1. For all calls that were answered after being starved, calculate PS as defined in section on Methods of calculating Preference Scores.
2. Calculate the average Preference Match Starved value by summing the PS for the number of starved calls m answered and dividing by m.

### APPENDIX A

**AGENTHISTORY Table**

| Field Name | Can Field be NULL? | Datatype | Is Field a Key? |
|---|---|---|---|
| IntervalStartA | NO | DATETIME | PK |
| IntervalEndA | NO | DATETIME | PK |
| AgentID | NO | CHAR 8 | PK |
| RoundedStartA | NO | DATETIME | |
| RoundedEndA | NO | DATETIME | |
| Avail_R | | LargeInt | |
| Unavail_R | | LargeInt | |
| Work_R | | LargeInt | |
| Pend_R | | LargeInt | |
| OnCall_R | | LargeInt | |
| OnHold_R | | LargeInt | |
| ACD_R | | LargeInt | |
| Unknown_R | | Largelnt | |
| Other_R | | LargeInt | |
| NonMMCall_R | | LargeInt | |

**AGENTS Table**

| Field Name | Can Field be NULL? | Datatype | Is Field a Key? |
|---|---|---|---|
| Userid | NO | CHAR 8 | |
| Password | NO | CHAR 8 | |
| Usertype | NO | SMALLINT | |
| AutoLogon | NO | SMALLINT | |
| AutoWork | NO | SMALLINT | |
| CallPriveleges | NO | SMALLINT | |
| AgentID | NO | CHAR 8 | PK |
| LastName | NO | CHAR 35 | |
| MidInitial | | CHAR 5 | |
| FirstName | NO | CHAR 30 | |
| Availability | NO | SMALLINT | |
| Extension | NO | CHAR 32 | |
| ResumeID | | CHAR 8 | FK (Resumes) |
| ACDGroup | NO | CHAR 32 | |
| ACDGroupNm | | CHAR 32 | |
| Department | | CHAR 30 | |
| Comment | | CHAR 80 | |
| BackupID | | CHAR 8 | FK (Agents) |
| BackupStartDate | | TIMESTAMP | |
| BackupEndDate | | TIMESTAMP | |
| Comment | | CHAR 80 | |

**CALL_HISTORY Table**

| Field Name | Can Field be NULL? | Datatype | Is Field a Key? |
|---|---|---|---|
| Timestamp | NO | DATETIME | PK |
| TADS Callid count | NO | LargeInt | |
| TADS Callid time | NO | LargeInt | |
| TADS Callid server | NO | LargeInt | |
| Call Type | NO | SmallInt | |
| Requester ID | NO | CHAR 8 | |
| Requester Extension | NO | CHAR 32 | |
| ANI | | CHAR 32 | |
| DNIS | | CHAR 32 | |
| Initial Priority | NO | SMALLINT | |
| Dequeue Priority | NO | SMALLINT | |
| StarvePriority | NO | SMALLINT | |
| PriorityClass | NO | SMALLINT | |
| MaxWait | NO | SMALLINT | |
| Mand Skills | | VARCHAR 1000 | |
| Opt Skills | | VARCHAR 1000 | |
| Time Enqueued | NO | DATETIME | |
| Time Assigned | | DATETIME | |
| Time Dequeued | | DATETIME | |
| Agent ID | | CHAR 8 | |
| Agent Extension | | CHAR 32 | |
| Call Caption | | CHAR 30 | |
| Dequeue Reason | NO | SMALLINT | |
| Dequeue Comment | | CHAR 80 | |
| skillScore | | SMALLINT | |
| prefScore | | SMALLINT | |

**EL_ROUTING Table**

| Field Name | Can Field be NULL? | Datatype | Is Field a Key? |
|---|---|---|---|
| SortIndex | NO | CHAR 67 | |
| ANI | NO | CHAR 32 | PK |
| DNIS | NO | CHAR 32 | PK |
| mandSkills | | VARCHAR 1000 | |
| optSkills | | VARCHAR 1000 | |
| skillexpname | | CHAR 30 | FK (SkillExps) |
| priority | NO | SMALLINT | |
| priorityclass | NO | SMALLINT | |
| maxwait | NO | SMALLINT | |
| caption | | CHAR (80) | |
| comment | | CHAR (512) | |

**REQUESTERS Table**

| Field Name | Can Field be NULL? | Datatype | Is Field a Key? |
|---|---|---|---|
| RequesterCode | NO | CHAR 8 | PK |
| RequesterName | NO | CHAR 30 | |
| RequesterType | NO | SMALLINT | |
| StartupExitName | | CHAR 12 | |
| CallExitName | | CHAR 12 | |
| HBACDNum | | CHAR 32 | |
| OrigExtl | | CHAR 32 | |
| OrigExt2 | | CHAR 32 | |
| OrphanACDNum | | CHAR 32 | |
| XferCommand | | CHAR 10 | |
| Comment | | CHAR 80 | |

**REQUESTER_RESOURCES Table**

| Field Name | Can Field be NULL? | Datatype | Is Field a Key? |
|---|---|---|---|
| RequesterCode | NO | CHAR 8 | PK,FK(Requesters) |
| Extension | NO | CHAR 32 | PK |
| ACDGroupName | | CHAR 32 | |

**RESUMES Table**

| Field Name | Can Field be NULL? | Datatype | Is Field a Key? |
|---|---|---|---|
| ResumeCode | NO | CHAR 8 | PK |
| ResumeName | NO | CHAR 30 | |
| Comment | | CHAR 80 | |

**RESUME _DETAILS Table**

| Field Name | Can Field be NULL? | Datatype | Is Field a Key? |
|---|---|---|---|
| ResumeCode | NO | CHAR 8 | PK, FK (Resumes) |
| SkillCode | NO | CHAR 8 | PK, FK (Skills) |
| SkillLevel | NO | CHAR 1 | |
| Excluded | NO | CHAR 1 | |
| Preference | NO | CHAR 1 | |
| Comment | | CHAR 80 | |

**SKILLS_EXPRESSIONS Table**

| Field Name | Can Field be NULL? | Datatype | Is Field a Key? |
|---|---|---|---|
| SkillExpressioNOame | NO | CHAR 30 | PK |
| MandSkillExpression | | VARCHAR 1000 | |
| OptSkillExpression | | VARCHAR 1000 | |
| Comment | | CHAR 80 | |

**SKILLS Table**

| Field Name | Can Field be NULL? | Datatype | Is Field a Key? |
|---|---|---|---|
| SkillCode | NO | CHAR 8 | PK |
| SkillName | NO | CHAR 30 | |
| ParentCode | | CHAR 8 | FK (Skills) |
| Comment | | CHAR 80 | |

**SYSPARMS Table**

| Field Name | Can Field be NULL? | Datatype | Is Field a Key? |
|---|---|---|---|
| ParmName | NO | CHAR 30 | |
| ParmValue | NO | CHAR 80 | |
| Comment | | CHAR 200 | |

**Valid System Parameters**

| Parameter Name | Range of Valid Values | Description |
|---|---|---|
| SwitchType | 1 | 9005 or 9006 |
| Passive | 1 | No,Yes |
| MatchMethod | 0-3 | ie. BestAgent or Preference |
| WaitTime | 0-3600 | When a transaction has waited WaitTime seconds, boost |
| WaitAmount | 0-99 | priority by WaitAmount. |
| ServLevMin | 0-99(future) | When Service Level falls below ServLevMin, |
| ServLevDif | 0-99(future) | by ServLevDif percentage points, boost |
| ServLevAmount | 0-99(future) | priority by ServLevAmount. |
| AbandonMax | 0-99(future) | When Abandon Rate rises above AbandonMax |
| AbandonDif | 0-99(future | by AbandonDif percentage points, boost |
| AbandonAmount | 0-99(future) | priority by AbandonAmount. |
| MaxAgentPendingTime | 0-3600 | Max time an Agent can spend in pending state. This parm will depend on the maximum time the VRU will be in an uninterruptable state. |
| MaxCallPendingTime | 0-3600 | Max time a transaction can spend in pending state. |
| MaxCallOrphanTime | 0-3600 | Max time a transaction can spend in orphan state. |
| StarvePriority | 0-99 | Priority at which calls are considered starved. |
| MandLevel | 1 | Levels on mandatories aren't/are flexible when transaction is starved |
| TADSServerName | | TADS Server Name for MMKR Server |
| AgentActivityPeriod | | |
| ELRequester | 1 | Y/N |
| MaxReportDays | 0-360 | Max number of days of history records to keep. |
| AgentStatusType | | Qviewer or Telephone |
| MinFreeSpace | | Minimum Amount of free space to leave on db drive |
| QVRefreshAgent | | Qviewer Refresh Interval for Agents |
| QVRefreshSuper | | Qviewer Refresh Interval for Supervisors |
| QVAgentsAgent | | Max # Agents Agent can view |
| QVAgentsSuper | | Max # Agents supervisor can view |
| QVSkillsAgent | | Max # skills Agent can view |
| -QVSkillsSuper | | Max # Skills supervisor can view |
| QVCallsAgent | | Max # calls Agent can view |
| QVCallsSuper | | Max # calls supervisor can view |
| QVDSRefresh | | Qviewer Data Server refresh rate |

## Claims

1. An automatic call distribution system (110) for distributing a transaction between plurality of agents (152,154,156,158) at a call center, said automatic call distribution system (110) comprising:
a transaction queue (202), for storing a set of skill requirement data for said transaction; **characterised by**
a skills inventory database (206), for (206) storing a set of skill data for each of said plurality of agents, said data including skill level and preference for a particular agent, whereby said preference is a measure of the preference for having a particular agent handle a particular transaction;
a transaction dispatcher (208), for comparing said set of skill requirement data for the transaction with said skill data for said agents and for selecting one of said agents for processing of said transaction on the basis of both skill level and preference; and
a switching circuit (120), said switching circuit responsive to said transaction dispatcher for switching said transaction to said selected agent.

2. The system as in claim 1 wherein the selecting of one of said agents is made on the basis of preference taking priority over skill level.

3. The system as in claim 1 wherein the selecting of one of said agents is made on the basis of skill level taking priority over preference.

4. The system as in claim 2 wherein in the case of two or more agents with equal skill scores, the system is arranged for using the preference scores to select.

## Patentansprüche

1. Automatisches Anrufverteilungssystem (110) zum Verteilen einer Transaktion auf eine Vielzahl von Mitarbeitern (152, 154, 165, 158) in einer Anrufzentrale, wobei das automatische Anrufverteilungssystem (110) Folgendes umfasst:
eine Transaktionswarteschlange (202) zum Speichern eines Datensatzes der für die Transaktion erforderlichen Fertigkeiten;
**gekennzeichnet durch**
eine Fertigkeitenbestandsdatenbank (206) zum Speichern (206) eines Datensatzes der Fertigkeiten für jeden aus der Vielzahl von Mitarbeitern, wobei die Daten den Fertigkeitsgrad und den Bevorzugungsgrad eines bestimmten Mitarbeiters beinhalten, wobei der Bevorzugungsgrad ein Maß dafür ist, wie stark ein bestimmter Mitarbeiter für den Umgang mit einer bestimmten Transaktion zu bevorzugen ist;
einen Transaktionsabwickler (208) zum Vergleichen des Datensatzes der für die Transaktion erforderlichen Fertigkeiten mit den Fertigkeitendaten der Mitarbeiter und zum Auswählen eines der Mitarbeiter zum Bearbeiten der Transaktion anhand des Fertigkeitsgrades und auch des Bevorzugungsgrades; und
eine Vermittlungsschaltung (120), wobei die Vermittlungsschaltung als Reaktion auf den Transaktionsabwickler die Transaktion an den ausgewählten Mitarbeiter vermittelt.

2. System nach Anspruch 1, bei welchem das Auswählen eines der Mitarbeiter stärker anhand des Bevorzugungsgrades als anhand des Fertigungsgrades erfolgt.

3. System nach Anspruch 1, bei welchem das Auswählen eines der Mitarbeiter stärker anhand des Fertigungsgrades als anhand des Bevorzugungsgrades erfolgt.

4. System nach Anspruch 2, bei welchem im Fall von zwei Mitarbeitern mit gleichem Fertigkeitsgrad das System so eingerichtet ist, dass die Auswahl anhand des Bevorzugungsgrades erfolgt.

## Revendications

1. Un système de distribution d'appels automatique (110), pour distribuer une transaction entre une pluralité d'agents (152, 154, 156, 158) en un centre d'appel, ledit système de distribution d'appels automatique (110) comprenant :
une file d'attente de transactions (202),, pour stocker un jeu de données d'exigence d'habileté pour ladite transaction ; **caractérisé par**
une base de données d'inventaire d'habileté (206), pour (206) stocker un jeu de données d'habileté pour chacune de ladite pluralité des agents, lesdites données incluant un niveau d'habileté et une préférence pour un agent particulier, de manière que ladite préférence soit une indication quantitative de la préférence à ce qu'un agent particulier traite une transaction particulière ;
un distributeur de transaction (208), pour comparer ledit jeu de données d'exigence d'habileté pour la transaction auxdites données d'habileté pour lesdits agents, et pour sélectionner l'un desdits agents pour effectuer le traitement de ladite transaction, sur la base à la fois du niveau d'habileté et d'une préférence ; et
un circuit de commutation (120), ledit circuit de commutation réagissant audit distributeur de transaction, pour commuter ladite transaction audit agent sélectionné.

2. Le système selon la revendication 1, dans lequel la sélection d'un desdits agents est effectuée sur la base d'une préférence, ayant priorité sur un niveau d'habileté.

3. Le système selon la revendication 1, dans lequel la sélection d'un desdits agents est effectuée sur la base d'un niveau d'habileté, ayant priorité sur une préférence.

4. Le système selon la revendication 2, dans lequel dans le cas où l'on a deux agents ou plus ayant des indices d'habileté identiques, le système est agencé pour utiliser les indices de préférence pour effectuer la sélection.
